# EUROPEAN PATENT APPLICATION

(11) **EP 4 586 729 A1**
(43) Date of publication of application: **16.07.2025**
(21) Application number: 23870303.7
(22) Date of filing: 12.09.2023
(51) Int. Cl.: H04W 74/08

(54) **COMMUNICATION METHOD, COMMUNICATION DEVICE, AND SYSTEM**

(30) Priority: 27.09.2022 CN 202211183528
(71) Applicant: Huawei Technologies Co., Ltd., Shenzhen, Guangdong 518129 (CN)
(72) Inventor: QI, Hong, Shenzhen, Guangdong 518129 (CN); SU, Hongjia, Shenzhen, Guangdong 518129 (CN); ZHANG, Yi, Shenzhen, Guangdong 518129 (CN); LU, Lei, 80992 Duesseldorf (DE)
(74) Representative: Körber, Martin Hans
(86) International application number: PCT/CN2023/118265
(87) International publication number: WO 2024/067065

(57) **Abstract**

Embodiments of this application provide a communication method, a communication apparatus, and a system. In the method, a terminal device obtains channel occupancy time COT, where the COT consists of N time units, and N is an integer greater than or equal to 1; sends first sidelink information to at least two terminal devices in a first time unit in the COT; determines a size of a contention window based on feedback information of the at least two terminal devices for the first sidelink information; and determines, based on the size of the contention window, a random backoff number for performing a channel access procedure, and sends second sidelink information based on a result of the channel access procedure. Specifically, the first sidelink information may be first sidelink information sent within reference duration, and the size of the contention window is determined based on the feedback information of the at least two terminal devices that receive the first sidelink information. A size of a contention window in data transmission in a multicast manner can be better determined, improving data transmission performance.

## Description

This application claims priority to Chinese Patent Application No. 202211183528.8, filed with the China National Intellectual Property Administration on September 27, 2022 and entitled "COMMUNICATION METHOD, COMMUNICATION APPARATUS, AND SYSTEM", which is incorporated herein by reference in its entirety.

### TECHNICAL FIELD

Embodiments of this application relate to the field of wireless communication, and in particular, to a communication method, a communication apparatus, and a system.

### BACKGROUND

In a wireless communication system, frequency bands used by a communication device may be classified into a licensed (Licensed) frequency band and an unlicensed (Unlicensed) frequency band. On the licensed frequency band, the communication device uses a spectrum resource based on scheduling of a central node. On the unlicensed frequency band, the communication device contends for a channel by using a channel access mechanism (for example, a listen-before-talk (listen-before-talk, LBT) mechanism).

The LBT mechanism is a channel access rule based on random backoff. Before accessing a channel and starting to send data send, the communication device needs to sense (sense) whether the channel is idle (idle). If the channel is kept idle for a period of time, the communication device can occupy the channel and send the data on the channel. A time length for which the channel is occupied is referred to as channel occupancy time (channel occupancy time, COT).

One of LBT mechanisms is LBT based on random backoff and with a contention window in a variable size, which is referred to as Cat 4 LBT in 3GPP for short. In Cat 4 LBT, the communication device generates a random number N based on the contention window in the variable size, and may perform sending after sensing that a channel is in an idle state for a period of time determined based on the random number N. The size of the contention window is related to a minimum value and a maximum value of N, and the communication device can change the size of the contention window.

In an NR-U system, a size of a contention window is adjusted only for data transmission in a unicast manner. Generally, there is a HARQ feedback for data transmission in the unicast manner. However, in the conventional technology, there is no adjustment solution for setting a size of a contention window for data transmission in a multicast manner, and there may be no HARQ feedback for data transmission in the multicast manner. Therefore, a new contention window size adjustment solution is urgently needed, to be better applicable to data transmission in a multicast manner and/or data transmission without a HARQ feedback, thereby ensuring data transmission performance.

### SUMMARY

Embodiments of this application provide a communication method, a communication apparatus, and a system. A size of a contention window can be more accurately determined, ensuring data transmission performance.

A terminal device in embodiments of this application may be a device or a component (for example, a chip system) in the device that implements a terminal function.

According to a first aspect, an embodiment of this application provides a communication method. The method may include: A terminal device obtains channel occupancy time COT, where the COT consists of N time units, and N is an integer greater than or equal to 1; sends first sidelink information to at least two terminal devices in a first time unit in the COT; determines a size of a contention window based on feedback information of the at least two terminal devices for the first sidelink information; and determines, based on the size of the contention window, a random backoff number for performing a channel access procedure, and sends second sidelink information based on the channel access procedure.

The communication method can be better applicable to data transmission in a multicast manner, and a size of a contention window in a multicast scenario can be more accurately determined, ensuring data transmission performance.

In a possible design, the first time unit includes at least one time unit, the first sidelink information includes at least one piece of sidelink information, and the at least one time unit is in one-to-one correspondence with the at least one piece of sidelink information.

The at least one piece of sidelink information includes sidelink information for initial transmission and/or sidelink information for retransmission.

In a possible design, the sending first sidelink information to at least two terminal devices in a first time unit in the COT; and determining a size of a contention window based on feedback information for the first sidelink information includes: sending the at least one piece of sidelink information to the at least two terminal devices in the at least one time unit, and receiving feedback information of the at least two terminal devices for the at least one piece of sidelink information; and when a first condition is met, determining that the size of the contention window is a preset value, or determining that the size of the contention window remains unchanged, where the first condition includes: the feedback information of each terminal device in the at least two terminal devices for the at least one piece of sidelink information includes at least one acknowledgment ACK; or when a second condition is met, increasing the size of the contention window, where the second condition includes: feedback information of at least one terminal device in the at least two terminal devices for the at least one piece of sidelink information includes only a negative acknowledgment NACK, where the size of the contention window is greater than or equal to the preset value.

In the foregoing possible design, a feedback is performed based on a worst terminal device feedback status in multicast, and a possible case in which a hidden terminal device causes another terminal device to keep failing receiving is considered. The contention window is adjusted based on a worst feedback of a terminal device, so that a problem of a conflict caused by a same contention window in multicast can be effectively resolved.

In a possible design, the sending first sidelink information to at least two terminal devices in a first time unit in the COT; and determining a size of a contention window based on feedback information for the first sidelink information includes: sending the at least one piece of sidelink information to the at least two terminal devices in the at least one time unit, and receiving feedback information of at least one terminal device for the at least one piece of sidelink information; and when a third condition is met, determining that the size of the contention window is a preset value, where the third condition includes: a proportion of an ACK included in all feedback information of all terminal devices in the at least two terminal devices to all the feedback information is greater than or equal to a first threshold; when a fourth condition is met, determining that the size of the contention window remains unchanged, where the fourth condition includes: a proportion of an ACK included in all feedback information of all terminal devices in the at least one terminal device to all the feedback information is less than a first threshold and greater than or equal to a second threshold; or when a fifth condition is met, increasing the size of the contention window, where the fifth condition includes: a proportion of an ACK included in all feedback information of all terminal devices in the at least one terminal device to all the feedback information is less than a second threshold, where the size of the contention window is greater than or equal to the preset value.

In the foregoing possible design, in a multicast scenario, a higher proportion of a fed back NACK indicates a higher probability of a potential data sending conflict, and a higher corresponding necessity of adjusting the contention window. A probability of a sending conflict may be indirectly determined by calculating a proportion of transmission failures in feedbacks, and the size of the contention window is further determined to be adjusted by comparing the probability with the threshold. This reduces a probability of a conflict in multicast, and improves system resource utilization.

In a possible design, the communication method further includes: The terminal device determines reference duration, where the reference duration includes the first time unit, and the reference duration includes at least one of the following conditions: The reference duration consists of a 1^{st} time unit to an i^{th} time unit in the COT, where feedback information is obtainable in the COT for sidelink information sent in each time unit included in the reference duration, feedback information is unobtainable in the COT for sidelink information sent in the i^{th} time unit to an N^{th} time unit, and 1 ≤ i ≤ N. Alternatively, the reference duration consists of a j^{th} time unit to an i^{th} time unit in the COT, where the j^{th} time unit is a i^{st} time unit in the COT and in which a feedback is enabled, j ≤ i, and 1 ≤ i ≤ N. Alternatively, the reference duration consists of a k^{th} time unit to an m^{th} time unit in the COT, where j ≤ k ≤ m or j ≤ k ≤ m, and m ≤ N or m ≤ i. Further, the reference duration is the same as the first time unit. By defining the reference duration, feedback information for sidelink information sent in specific time units can be more accurately controlled to determine the size of the contention window. This further improves data transmission performance.

In a possible design, at least one of the first threshold and the second threshold is configured by a resource pool. A specific configuration manner may be configuration by using higher layer signaling, for example, an RRC message, or pre-configuration in a protocol. The higher layer signaling may be from a base station or another terminal device. This is not limited in this application.

In a possible design, that the feedback information includes the ACK is specifically that an acknowledgment corresponding to the first sidelink information is received, or no negative acknowledgment corresponding to the first sidelink information is received.

According to a second aspect, an embodiment of this application further provides a communication method. The method may include: A terminal device obtains channel occupancy time COT, where the COT consists of N time units, and N is an integer greater than or equal to 1; sends first sidelink information to at least one terminal device in a first time unit in the COT, where the first time unit includes at least one time unit, the first sidelink information includes at least one piece of sidelink information, and the at least one time unit is in one-to-one correspondence with the at least one piece of sidelink information; determines a size of a contention window, and when a third condition is met, determines that the size of the contention window is a preset value, where the third condition includes: a ratio of a quantity of pieces of fourth sidelink information to a quantity of pieces of third sidelink information is less than a first threshold; when a fourth condition is met, determines that the size of the contention window remains unchanged, where the fourth condition includes: a ratio of a quantity of pieces of fourth sidelink information to a quantity of pieces of third sidelink information is greater than or equal to a first threshold and less than a second threshold; or when a fifth condition is met, increases the size of the contention window, where the fifth condition includes: a ratio of a quantity of pieces of fourth sidelink information to a quantity of pieces of third sidelink information is greater than or equal to a second threshold, where the size of the contention window is greater than or equal to the preset value, the third sidelink information belongs to the first sidelink information, the third sidelink information includes sidelink information whose quantity of transmission times is equal to 1, the fourth sidelink information belongs to the first sidelink information, and the fourth sidelink information includes sidelink information whose quantity of transmission times is greater than 1; and determines, based on the size of the contention window, a random backoff number for performing a channel access procedure, and sends second sidelink information based on the channel access procedure.

It may be understood that, when the quantity of transmission times is equal to 1, it is equivalent to initial transmission (initial transmission), and when the quantity of transmission times is greater than 1, it is equivalent to performing retransmission one or more times after initial transmission. The initial transmission means that no transmission is performed before the COT, and the retransmission means that transmission is performed one or more times before the COT. The communication method is applicable to a scenario in which a feedback is disabled and the terminal device performs blind retransmission. A size of a contention window may be determined based on a quantity of blind retransmission times of first sidelink information, so that the size of the contention window is accurately determined without a feedback, improving data transmission performance.

In a possible design, the third condition, the fourth condition, and the fifth condition in the communication method provided in the second aspect may alternatively be replaced with the following: The third condition includes: A quantity of sending times of third sidelink information is less than a first threshold. The fourth condition includes: A quantity of sending times of third sidelink information is greater than or equal to a first threshold and less than a second threshold. The fifth condition includes: A quantity of sending times of third sidelink information is greater than or equal to a second threshold. Values of the first threshold and the second threshold are integers greater than 0. The size of the contention window is greater than or equal to the preset value, the third sidelink information belongs to the first sidelink information, and the third sidelink information is sidelink information with a maximum quantity of transmission times.

It may be understood that the quantity of transmission times includes a quantity of times of transmitting same sidelink information before the COT. Further, a quantity of times (usually one time) of transmitting the sidelink information in the COT may be further included.

In a possible design, the first time unit includes at least one time unit, the first sidelink information includes at least one piece of sidelink information, and the at least one time unit is in one-to-one correspondence with the at least one piece of sidelink information.

The at least one piece of sidelink information includes sidelink information for initial transmission and/or sidelink information for retransmission.

In a possible design, the communication method further includes: The terminal device determines reference duration, where the reference duration includes the first time unit, and the reference duration includes at least one of the following conditions: The reference duration consists of a 1^{st} time unit to an i^{th} time unit in the COT, where feedback information is obtainable in the COT for sidelink information sent in each time unit included in the reference duration, feedback information is unobtainable in the COT for sidelink information sent in the i^{th} time unit to an N^{th} time unit, and 1 ≤ i ≤ N. Alternatively, the reference duration consists of a j^{th} time unit to an i^{th} time unit in the COT, where the j^{th} time unit is a i^{st} time unit in the COT and in which a feedback is enabled, j ≤ i, and 1 ≤ i ≤ N. Alternatively, the reference duration consists of a k^{th} time unit to an m^{th} time unit in the COT, where j ≤ k ≤ m or j ≤ k ≤ m, and m ≤ N or m ≤ i. Further, the reference duration is the same as the first time unit. By defining the reference duration, feedback information for sidelink information sent in specific time units can be more accurately controlled to determine the size of the contention window. This further improves data transmission performance.

In a possible design, at least one of the first threshold and the second threshold is configured by a resource pool. A specific configuration manner may be configuration by using higher layer signaling, for example, an RRC message, or pre-configuration in a protocol. The higher layer signaling may be from a base station or another terminal device. This is not limited in this application.

In a possible design, that the feedback information includes the ACK is specifically that an acknowledgment corresponding to the first sidelink information is received, or no negative acknowledgment corresponding to the first sidelink information is received.

According to a third aspect, an embodiment of this application further provides a communication method. The method may include: A terminal device obtains channel occupancy time COT, where the COT consists of N time units, and N is an integer greater than or equal to 1; determines reference duration, where the reference duration includes a first time unit, and the reference duration is defined as follows: the reference duration consists of a 1^{st} time unit to an i^{th} time unit in the COT, where feedback information is obtainable in the COT for sidelink information sent in each time unit included in the reference duration, feedback information is unobtainable in the COT for sidelink information sent in the i^{th} time unit to an N^{th} time unit, and 1 ≤ i ≤ N; or the reference duration consists of a j^{th} time unit to an i^{th} time unit in the COT, where the j^{th} time unit is a 1^{st} time unit in the COT and in which a feedback is enabled, and j ≤ i; sends first sidelink information to at least one terminal device in the first time unit in the COT, where the first time unit includes at least one time unit, the first sidelink information includes at least one piece of sidelink information, and the at least one time unit is in one-to-one correspondence with the at least one piece of sidelink information; determines a size of a contention window based on feedback information of the at least one terminal device for the first sidelink information; and determines, based on the size of the contention window, a random backoff number for performing a channel access procedure, and sends second sidelink information based on the channel access procedure. The at least one piece of sidelink information includes sidelink information for initial transmission and/or sidelink information for retransmission.

In the foregoing communication method, the size of the contention window may be accurately determined by determining the reference duration, improving data transmission performance. The communication method is applicable to unicast and multicast scenarios.

In a possible design, when a first condition is met, the terminal device determines that the size of the contention window is a preset value, or determines that the size of the contention window remains unchanged, where the first condition includes: Feedback information received by the terminal device is all ACKs. Alternatively, when a second condition is met, the terminal device increases the size of the contention window, where the second condition includes: Feedback information received by the terminal device is all NACKs. The size of the contention window is greater than or equal to the preset value.

In a possible design, when a third condition is met, the terminal device determines that the size of the contention window is a preset value, where the third condition includes: A proportion of an ACK received by the terminal device to all feedback information is greater than or equal to a first threshold. Alternatively, when a fourth condition is met, the terminal device determines that the size of the contention window remains unchanged, where the fourth condition includes: A proportion of an ACK received by the terminal device to all feedback information is less than a first threshold and greater than or equal to a second threshold. Alternatively, when a fifth condition is met, the terminal device increases the size of the contention window, where the fifth condition includes: A proportion of an ACK received by the terminal device to all feedback information is less than a second threshold. The size of the contention window is greater than or equal to the preset value.

In a possible design, at least one of the first threshold and the second threshold is configured by a resource pool. A specific configuration manner may be configuration by using higher layer signaling, for example, an RRC message, or pre-configuration in a protocol. The higher layer signaling may be from a base station or another terminal device. This is not limited in this application.

In a possible design, that the feedback information includes the ACK is specifically that an acknowledgment corresponding to the first sidelink information is received, or no negative acknowledgment corresponding to the first sidelink information is received.

According to a fourth aspect, an embodiment of this application provides a communication apparatus, including a processor and a transceiver. The processor is configured to obtain channel occupancy time COT, where the COT consists of N time units, and N is an integer greater than or equal to 1. The transceiver is configured to send first sidelink information to at least two terminal devices in a first time unit in the COT. The processor is further configured to: determine a size of a contention window based on feedback information of the at least two terminal devices for the first sidelink information; and determine, based on the size of the contention window, a random backoff number for performing a channel access procedure. The transceiver is configured to send second sidelink information based on the channel access procedure.

In a possible design, the first time unit includes at least one time unit, the first sidelink information includes at least one piece of sidelink information, and the at least one time unit is in one-to-one correspondence with the at least one piece of sidelink information.

The at least one piece of sidelink information includes sidelink information for initial transmission and/or sidelink information for retransmission.

In a possible design, the transceiver is specifically configured to: send the at least one piece of sidelink information to the at least two terminal devices in the at least one time unit, and receive feedback information of the at least two terminal devices for the at least one piece of sidelink information. The processor is configured to: when a first condition is met, determine that the size of the contention window is a preset value, or determine that the size of the contention window remains unchanged, where the first condition includes: the feedback information of each terminal device in the at least two terminal devices for the at least one piece of sidelink information includes at least one acknowledgment ACK; or when a second condition is met, increase the size of the contention window, where the second condition includes: feedback information of at least one terminal device in the at least two terminal devices for at least one piece of sidelink information includes only a negative acknowledgment NACK, where the size of the contention window is greater than or equal to the preset value.

In a possible design, the transceiver is configured to: send the at least one piece of sidelink information to the at least two terminal devices in the at least one time unit, and receive feedback information of at least one terminal device for the at least one piece of sidelink information. The processor is configured to: when a third condition is met, determine that the size of the contention window is a preset value, where the third condition includes: a proportion of an ACK included in all feedback information of all terminal devices in the at least two terminal devices to all the feedback information is greater than or equal to a first threshold; when a fourth condition is met, determine that the size of the contention window remains unchanged, where the fourth condition includes: a proportion of an ACK included in all feedback information of all terminal devices in the at least one terminal device to all the feedback information is less than a first threshold and greater than or equal to a second threshold; or when a fifth condition is met, increase the size of the contention window, where the fifth condition includes: a proportion of an ACK included in all feedback information of all terminal devices in the at least one terminal device to all the feedback information is less than a second threshold, where the size of the contention window is greater than or equal to the preset value.

In a possible design, the processor is further configured to determine reference duration, where the reference duration includes the first time unit, and the reference duration includes at least one of the following conditions: The reference duration consists of a 1^{st} time unit to an i^{th} time unit in the COT, where feedback information is obtainable in the COT for sidelink information sent in each time unit included in the reference duration, feedback information is unobtainable in the COT for sidelink information sent in the i^{th} time unit to an N^{th} time unit, and 1 ≤ i ≤ N. Alternatively, the reference duration consists of a j^{th} time unit to an i^{th} time unit in the COT, where the j^{th} time unit is a 1^{st} time unit in the COT and in which a feedback is enabled, j ≤ i, and 1 ≤ i ≤ N. Alternatively, the reference duration consists of a k^{th} time unit to an m^{th} time unit in the COT, where j ≤ k ≤ m or j ≤ k ≤ m, and m ≤ N or m ≤ i. Further, the reference duration is the same as the first time unit.

In a possible design, at least one of the first threshold and the second threshold is configured by a resource pool. A specific configuration manner may be configuration by using higher layer signaling, for example, an RRC message, or pre-configuration in a protocol. The higher layer signaling may be from a base station or another terminal device. This is not limited in this application.

In a possible design, that the feedback information includes the ACK is specifically that an acknowledgment corresponding to the first sidelink information is received, or no negative acknowledgment corresponding to the first sidelink information is received.

According to a fifth aspect, an embodiment of this application provides a communication apparatus, including a processor and a transceiver. The processor is configured to obtain channel occupancy time COT, where the COT consists of N time units, and N is an integer greater than or equal to 1. The transceiver is configured to send first sidelink information to at least one terminal device in a first time unit in the COT, where the first time unit includes at least one time unit, the first sidelink information includes at least one piece of sidelink information, and the at least one time unit is in one-to-one correspondence with the at least one piece of sidelink information. The processor is further configured to: determine a size of a contention window; when a third condition is met, determine that the size of the contention window is a preset value, where the third condition includes: a ratio of a quantity of pieces of fourth sidelink information to a quantity of pieces of third sidelink information is less than a first threshold; when a fourth condition is met, determine that the size of the contention window remains unchanged, where the fourth condition includes: a ratio of a quantity of pieces of fourth sidelink information to a quantity of pieces of third sidelink information is greater than or equal to a first threshold and less than a second threshold; or when a fifth condition is met, increase the size of the contention window, where the fifth condition includes: a ratio of a quantity of pieces of fourth sidelink information to a quantity of pieces of third sidelink information is greater than or equal to a second threshold, where the size of the contention window is greater than or equal to the preset value, the third sidelink information belongs to the first sidelink information, the third sidelink information includes sidelink information whose quantity of transmission times is equal to 1, the fourth sidelink information belongs to the first sidelink information, and the fourth sidelink information includes sidelink information whose quantity of transmission times is greater than 1; and determine, based on the size of the contention window, a random backoff number for performing a channel access procedure. The transceiver is further configured to send second sidelink information based on the channel access procedure.

It may be understood that, when the quantity of transmission times is equal to 1, it is equivalent to initial transmission (initial transmission), and when the quantity of transmission times is greater than 1, it is equivalent to performing retransmission one or more times after initial transmission. The initial transmission means that no transmission is performed before the COT, and the retransmission means that transmission is performed one or more times before the COT. In a possible design, the third condition, the fourth condition, and the fifth condition in the communication method provided in the fourth aspect may alternatively be replaced with the following: The third condition includes: A quantity of sending times of third sidelink information is less than a first threshold. The fourth condition includes: A quantity of sending times of third sidelink information is greater than or equal to a first threshold and less than a second threshold. The fifth condition includes: A quantity of sending times of third sidelink information is greater than or equal to a second threshold. Values of the first threshold and the second threshold are integers greater than 0. The size of the contention window is greater than or equal to the preset value, the third sidelink information belongs to the first sidelink information, and the third sidelink information is sidelink information with a maximum quantity of transmission times.

It may be understood that the quantity of transmission times includes a quantity of times of transmitting same sidelink information before the COT. Further, a quantity of times (usually one time) of transmitting the sidelink information in the COT may be further included.

In a possible design, the first time unit includes at least one time unit, the first sidelink information includes at least one piece of sidelink information, and the at least one time unit is in one-to-one correspondence with the at least one piece of sidelink information.

The at least one piece of sidelink information includes sidelink information for initial transmission and/or sidelink information for retransmission.

In a possible design, the processor is further configured to determine reference duration, where the reference duration includes the first time unit, and the reference duration includes at least one of the following conditions: The reference duration consists of a 1^{st} time unit to an i^{th} time unit in the COT, where feedback information is obtainable in the COT for sidelink information sent in each time unit included in the reference duration, feedback information is unobtainable in the COT for sidelink information sent in the i^{th} time unit to an N^{th} time unit, and 1 ≤ i ≤ N. Alternatively, the reference duration consists of a j^{th} time unit to an i^{th} time unit in the COT, where the j^{th} time unit is a 1^{st} time unit in the COT and in which a feedback is enabled, j ≤ i, and 1 ≤ i ≤ N. Alternatively, the reference duration consists of a k^{th} time unit to an m^{th} time unit in the COT, where j ≤ k ≤ m or j ≤ k ≤ m, and m ≤ N or m ≤ i. Further, the reference duration is the same as the first time unit.

In a possible design, at least one of the first threshold and the second threshold is configured by a resource pool. A specific configuration manner may be configuration by using higher layer signaling, for example, an RRC message, or pre-configuration in a protocol. The higher layer signaling may be from a base station or another terminal device. This is not limited in this application.

In a possible design, that the feedback information includes the ACK is specifically that an acknowledgment corresponding to the first sidelink information is received, or no negative acknowledgment corresponding to the first sidelink information is received.

According to a sixth aspect, an embodiment of this application provides a communication apparatus, including a processor and a transceiver. The processor is configured to: obtain channel occupancy time COT, where the COT consists of N time units, and N is an integer greater than or equal to 1; determine reference duration, where the reference duration includes a first time unit, and the reference duration is defined as follows: the reference duration consists of a 1^{st} time unit to an i^{th} time unit in the COT, where feedback information is obtainable in the COT for sidelink information sent in each time unit included in the reference duration, feedback information is unobtainable in the COT for sidelink information sent in the i^{th} time unit to an N^{th} time unit, and 1 ≤ i ≤ N; or the reference duration consists of a j^{th} time unit to an i^{th} time unit in the COT, where the j^{th} time unit is a 1^{st} time unit in the COT and in which a feedback is enabled, and j ≤ i. The transceiver is configured to send first sidelink information to at least one terminal device in the first time unit in the COT, where the first time unit includes at least one time unit, the first sidelink information includes at least one piece of sidelink information, and the at least one time unit is in one-to-one correspondence with the at least one piece of sidelink information. The processor is further configured to: determine a size of a contention window based on feedback information of the at least one terminal device for the first sidelink information; and determine, based on the size of the contention window, a random backoff number for performing a channel access procedure. The transceiver is further configured to send second sidelink information based on the channel access procedure. The at least one piece of sidelink information includes sidelink information for initial transmission and/or sidelink information for retransmission.

In a possible design, the processor is specifically configured to: when a first condition is met, determine that the size of the contention window is a preset value, or determine that the size of the contention window remains unchanged, where the first condition includes: feedback information received by the terminal device is all ACKs; or when a second condition is met, increase the size of the contention window, where the second condition includes: feedback information received by the terminal device is all NACKs, where the size of the contention window is greater than or equal to the preset value.

In a possible design, the processor is specifically configured to: when a third condition is met, determine that the size of the contention window is a preset value, where the third condition includes: a proportion of an ACK received by the communication apparatus to all feedback information is greater than or equal to a first threshold; when a fourth condition is met, determine that the size of the contention window remains unchanged, where the fourth condition includes: a proportion of an ACK received by the communication apparatus to all feedback information is less than a first threshold and greater than or equal to a second threshold; or when a fifth condition is met, increase the size of the contention window, where the fifth condition includes: a proportion of an ACK received by the communication apparatus to all feedback information is less than a second threshold, where the size of the contention window is greater than or equal to the preset value.

In a possible design, at least one of the first threshold and the second threshold is configured by a resource pool. A specific configuration manner may be configuration by using higher layer signaling, for example, an RRC message, or pre-configuration in a protocol. The higher layer signaling may be from a base station or another terminal device. This is not limited in this application.

In a possible design, that the feedback information includes the ACK is specifically that an acknowledgment corresponding to the first sidelink information is received, or no negative acknowledgment corresponding to the first sidelink information is received.

According to a seventh aspect, this application provides a communication apparatus, configured to implement functions in the first aspect to the third aspect and possible designs.

According to an eighth aspect, an embodiment of this application provides a communication apparatus. The apparatus has a function of implementing the communication method in any design of any one of the foregoing aspects. The function may be implemented by hardware, or may be implemented by hardware by executing corresponding software. The hardware or the software includes one or more modules corresponding to the function.

According to a ninth aspect, an embodiment of this application provides a communication apparatus, including a processor and a memory. The memory is configured to store instructions. When the processor executes the instructions stored in the memory, the communication apparatus performs the communication method in any design of any one of the foregoing aspects.

According to a tenth aspect, an embodiment of this application provides a communication apparatus, including a processor. The processor is configured to: be couple to a memory, and after reading instructions in the memory, perform the communication method in any design of any one of the foregoing aspects based on the instructions.

According to a fifteenth aspect, an embodiment of this application provides a computer-readable storage medium. The computer-readable storage medium stores instructions. When the instructions are run on a computer, the computer is enabled to perform the communication method in any design of any one of the foregoing aspects.

According to a twelfth aspect, an embodiment of this application provides a computer program product including instructions. When the computer program product runs on a computer, the computer is enabled to perform the communication method in any design of any one of the foregoing aspects.

According to a thirteenth aspect, an embodiment of this application provides a circuit system. The circuit system includes a processing circuit. The processing circuit is configured to perform the communication method in any design of any one of the foregoing aspects.

According to a fourteenth aspect, an embodiment of this application provides a chip or a chip system, including a processor. The processor is coupled to a memory. The memory stores instructions. When the instructions stored in the memory are executed by the processor, the communication method in any design of any one of the foregoing aspects is implemented.

According to a fifteenth aspect, an embodiment of this application provides a communication system. The communication system includes the terminal device in any one of the foregoing aspects and at least one terminal device that receives first sidelink information in any one of the foregoing aspects.

For technical effects brought by any possible design of the fourth aspect to the fifteenth aspect, refer to technical effects brought by a possible design of the first aspect to the third aspect. Details are not described herein again.

### BRIEF DESCRIPTION OF DRAWINGS

FIG. 1 is a diagram of a system architecture to which an embodiment of this application is applicable;
FIG. 2 is a diagram of another system architecture to which an embodiment of this application is applicable;
FIG. 3 is a diagram of still another system architecture to which an embodiment of this application is applicable;
FIG. 4 is a block diagram of a communication apparatus to which an embodiment of this application is applicable;
FIG. 5 is a block diagram of another communication apparatus to which an embodiment of this application is applicable;
FIG. 6 is a diagram of impact of a hidden node on communication;
FIG. 7 is a schematic flowchart of a communication method according to an embodiment of this application;
FIG. 8 is a diagram of reference duration according to an embodiment of this application;
FIG. 9 is a diagram of other reference duration according to an embodiment of this application;
FIG. 10 is a diagram of feedback information to which an embodiment of this application is applicable; and
FIG. 11 is a schematic flowchart of another communication method according to an embodiment of this application.

### DESCRIPTION OF EMBODIMENTS

In the specification and accompanying drawings of this application, the terms "first", "second", and the like are intended to distinguish between different objects or distinguish between different processing of a same object, but do not indicate a particular order of the objects. In addition, the terms "including", "having", or any other variant thereof in descriptions of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the terms such as "example" or "for example" are used to represent giving an example, an illustration, or a description. Any embodiment or design scheme described as an "example" or "for example" in embodiments of this application should not be explained as being more preferred or having more advantages than another embodiment or design scheme. Exactly, use of the terms such as "example" or "for example" is intended to present a related concept in a specific manner.

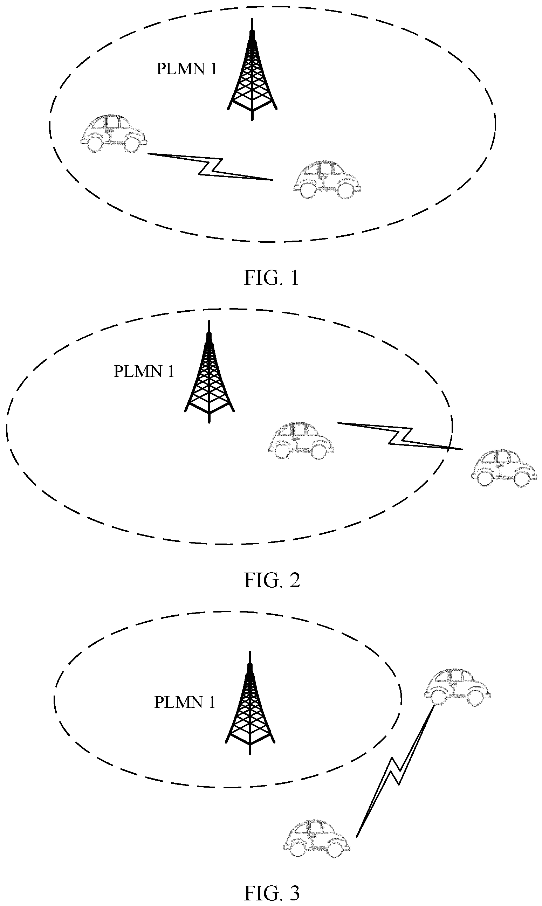

Embodiments of this application may be applied to a system for communication between terminal apparatuses, for example, a V2X communication system or a device-to-device (device-to-device, D2D) system. The following uses a V2X communication system as an example to describe a communication system to which embodiments of this application are applicable. Refer to FIG. 1, FIG. 2, and FIG. 3. The communication system includes at least two terminal apparatuses, and two terminal apparatuses can directly communicate with each other through a sidelink (sidelink, SL) (only two terminal apparatuses are shown in each of FIG. 1, FIG. 2, and FIG. 3). Optionally, the communication system may further include a network device. The terminal apparatus may further communicate with the network device.

The V2X communication system may have the following communication scenarios: vehicle-to-vehicle (vehicle-to-vehicle, V2V) communication, vehicle-to-infrastructure apparatus (vehicle-to-infrastructure, V2I) communication, vehicle-to-application server (vehicle-to-network, V2N) communication, vehicle-to-pedestrian's mobile terminal (vehicle-to-pedestrian, V2P) communication, and the like. In the V2X communication system, terminal apparatuses directly communicate with each other through a sidelink, without a receiving or sending process of a network device or an uplink or downlink communication link.

The terminal apparatus is mainly configured to receive or send data. Optionally, the terminal apparatus in embodiments of this application may be a device or a component in the device that implements a function of a terminal. For example, the terminal apparatus includes but is not limited to various handheld devices, vehicle-mounted devices, wearable devices, computing devices, or other processing devices connected to a wireless modem that have a wireless communication function. Alternatively, the terminal apparatus may include a subscriber unit (subscriber unit), a cellular phone (cellular phone), a smartphone (smartphone), a wireless data card, a personal digital assistant (personal digital assistant, PDA) computer, a tablet computer, a handheld (handheld) device, a laptop computer (laptop computer), a machine type communication (machine type communication, MTC) terminal (terminal), user equipment (user equipment, UE), a mobile terminal, and the like. For another example, the terminal apparatus may be a component in any one of the foregoing devices (for example, the terminal apparatus may be a chip system in any one of the foregoing devices). In some embodiments of this application, the terminal apparatus may alternatively be referred to as a terminal device or a terminal. This is uniformly described herein and is not described below again.

The network device in embodiments of this application is an apparatus that is deployed in a radio access network to provide a wireless communication function. Optionally, the network device may refer to a device that communicates with a wireless terminal on an air interface of an access network by using one or more cells. An apparatus for implementing a function of the network device may be the network device, or may be an apparatus (for example, a chip in the network device) that supports the network device in implementing the function. Optionally, the network device may perform attribute management on the air interface. The base station device may coordinate attribute management of the air interface. The network device includes various forms of macro base stations or micro base stations (also referred to as small cells), such as a relay device of a relay station or a chip of the relay device, a transmission reception point (transmission reception point, TRP), an evolved NodeB (evolved NodeB, eNB), a next-generation network node (g NodeB, gNB), and an evolved NodeB connected to a next-generation core network (ng evolved NodeB, ng-eNB). Alternatively, in a distributed base station scenario, the network device may be a baseband unit (baseband unit, BBU) and a remote radio unit (remote radio unit, RRU), or in a cloud radio access network (cloud radio access Network, CRAN) scenario, the network device may be a baseband unit pool (BBU pool) and an RRU.

Refer to FIG. 1, FIG. 2, and FIG. 3. For two terminal apparatuses that communicate with each other through a sidelink, there may be the following three communication scenarios: First, both the two terminal apparatuses fall within coverage of a same public land mobile network (public land mobile network, PLMN) (for example, a PLMN 1), as shown in FIG. 1. Second, only one terminal apparatus falls within coverage of a PLMN (for example, a PLMN 1), and the other terminal apparatus falls outside the coverage of the PLMN (for example, the PLMN 1), as shown in FIG. 2. Third, both the two terminal apparatuses fall outside coverage of a PLMN (for example, a PLMN 1), and there is no pre-configured cell identity in an area in which the two terminal apparatuses are located, as shown in FIG. 3. Dashed-line elliptic areas in FIG. 1, FIG. 2, and FIG. 3 each represent the coverage of the PLMN 1. Because the two terminal apparatuses communicate with each other through the sidelink, the two terminal apparatuses can normally communicate with each other regardless of whether both the two terminal apparatuses fall within coverage of a PLMN.

The communication systems shown in FIG. 1, FIG. 2, and FIG. 3 may be applied to a long term evolution (long term evolution, LTE) or long term evolution advanced (LTE Advanced, LTE-A) system, or may be applied to a 5G network or another network in the future. Certainly, the communication systems may alternatively be applied to a system in which LTE and 5G are mixed for networking or another system. This is not specifically limited in embodiments of this application. In different networks, the network device or the terminal apparatus in the foregoing communication system may correspond to different names. A person skilled in the art may understand that the names do not constitute a limitation on the device.

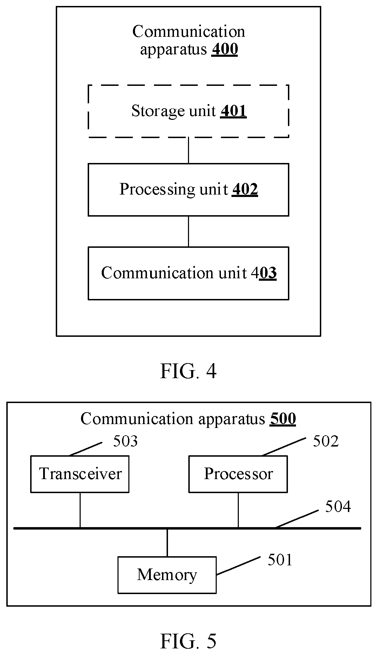

FIG. 4 is a block diagram of a communication apparatus according to an embodiment of this application. The communication apparatus 400 may exist in a form of software, or may be a device or a component (for example, a chip system) in the device. The communication apparatus 400 includes a processing unit 402 and a communication unit 403.

The processing unit 402 is mainly configured to: process a communication protocol and communication data, and control the communication apparatus to, for example, execute a software program, and process data of the software program.

The processing unit 402 may be a processor or a controller, for example, may be a CPU, a general-purpose processor, a DSP, an ASIC, an FPGA or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of the DSP and a microprocessor.

The communication unit 403 is also referred to as a transceiver unit, and may be divided into a sending unit (not shown in FIG. 4) and a receiving unit (not shown in FIG. 4). The sending unit is configured to support the communication apparatus 400 in sending information to another network element. The receiving unit is configured to support the communication apparatus 400 in receiving information from another network element. For example, when the communication apparatus 400 is a terminal device, the communication apparatus 400 may send information to an access network device or another terminal device, or receive information from an access network device or another terminal device through the communication unit 403. When the communication apparatus 400 is an access network device, the communication apparatus 400 may send information to a terminal device, or receive information from a terminal device through the communication unit 403. In addition, when the communication apparatus 400 is an access network device, the communication apparatus 400 further includes a unit that communicates with another access network device or a core network device. Details are not described herein.

The communication unit 403 may be a communication interface, a transceiver, a transceiver circuit, or the like. The communication interface is a general term. In a specific implementation, the communication interface may include a plurality of interfaces, for example, may include an interface (for example, a sidelink interface) between terminal devices and/or an air interface between a terminal device and an access network device.

The communication apparatus 400 may further include a storage unit 401. The storage unit is mainly configured to store a software program and data of the communication apparatus 400. The data may include but is not limited to original data, intermediate data, or the like.

The storage unit 401 may be a memory.

The communication apparatus 400 may be a terminal device, or may be an access network device.

When the processing unit 402 is a processor, the communication unit 403 is a communication interface, and the storage unit 401 is a memory, the communication apparatus 400 in this embodiment of this application may be shown in FIG. 5.

Refer to FIG. 5. A communication apparatus 500 includes a processor 502, a transceiver 503, and a memory 501.

The transceiver 503 may be an independently disposed transmitter, and the transmitter may be configured to send information to another device. Alternatively, the transceiver may be an independently disposed receiver, configured to receive information from another device. Alternatively, the transceiver may be a component that integrates information sending and receiving functions. A specific implementation of the transceiver is not limited in this embodiment of this application.

Optionally, the communication apparatus 500 may further include a bus 504. The transceiver 503, the processor 502, and the memory 501 may be connected to each other through the bus 504. The bus 504 may be a peripheral component interconnect (Peripheral Component Interconnect, PCI for short) bus or an extended industry standard architecture (Extended Industry Standard Architecture, EISA for short) bus, or the like. The bus 504 may be classified into an address bus, a data bus, a control bus, and the like. For ease of representation, only one bold line is used for representation in FIG. 5, but this does not mean that there is only one bus or only one type of bus.

A person skilled in the art can understand that various explanatory logic blocks, modules, circuits, and algorithms described with reference to the various aspects disclosed in this application may be implemented as electronic hardware, instructions that are stored in a memory or another computer-readable medium and that are executed by a processor or another processing device, or a combination thereof. In an example, the device described in this specification may be used in any circuit, hardware component, integrated chip (integrated circuit, IC), or IC chip. The memory disclosed in this application may be any type of memory in any size, and may be configured to store any type of required information. To clearly explain such interchangeability, various explanatory components, blocks, modules, circuits, and steps have been generally described above based on functionality. How to implement such functionality depends on a specific application, a design selection, and/or a design constraint that is imposed on an entire system. A person skilled in the art may use different manners to implement the described functionality for each particular application, but it should not be considered that such implementation determining goes beyond the protection scope of this application.

For ease of understanding embodiments of this application, the following first briefly describes terms in embodiments of this application. It should be understood that these descriptions are merely intended to facilitate understanding of embodiments of this application, and shall not constitute any limitation on this application.
1. Interface: A communication interface (Uu interface) between user equipment and a network device may be referred to as a Uu interface, a communication interface (PC5 interface) between user equipment and user equipment may be referred to as a PC5 interface, and a transmission link in the PC5 interface is defined as a sidelink (sidelink, SL).
2. Unlicensed frequency band (unlicensed spectrum): In a wireless communication system, frequency bands may be classified into a licensed frequency band and an unlicensed frequency band based on different used frequency bands. On the licensed frequency band, a user uses a spectrum resource based on scheduling of a central node. On the unlicensed frequency band, a transmit node needs to use a spectrum resource in a contention manner. Specifically, the transmit node contends for a channel in a listen-before-talk (listen-before-talk, LBT) manner. In a next-generation 5G NR system, NR protocol technologies in unlicensed frequency bands are collectively referred to as NR-U, and communication performance of a corresponding Uu interface is expected to be further improved by using the NR-U. Enabling SL communication on the unlicensed frequency band in local space is an important evolution direction, and corresponding protocol technologies may be collectively referred to as SL-U. Similar to the Uu interface, UE that works by using the SL-U also need to coexist with a nearby Wi-Fi device based on an LBT mechanism. A reason why the LBT mechanism becomes a mandatory feature of the unlicensed frequency band is that each region in the world has a regulation (regulation) requirement on use of the unlicensed frequency band. UEs in various forms operating in different communication protocols can use the unlicensed frequency band only when regulations are met, to fairly and efficiently use spectrum resources.
3. LBT: Energy detection and signal type detection are usually used in an LBT channel access manner. For example, in 3GPP, energy detection is used in NR-U, and a combination of the two detection methods is used in Wi-Fi. A detection threshold (Energy Detection Threshold) needs to be set for energy detection. When detected energy exceeds the detection threshold, it is determined that a channel is busy, and access to the channel is not allowed. When detected energy is lower than the detection threshold for more than a period of time, access to the channel is allowed. Specifically, LBT may include the following several types:
   **Category 1 LBT (Category 1 LBT):** Information is immediately sent after a short switching gap (switching gap). The category 1 LBT, Cat 1 LBT for short, is used by a communication device to immediately send information after a switching gap from a receiving state to a sending state in channel occupancy time (channel occupancy time, COT). The COT is time in which the communication device is allowed to occupy a channel after successfully accessing the channel, and time of the switching gap usually cannot be greater than 16 µs.
   **Category 2 LBT (Category 2 LBT):** LBT without random backoff. The category 2 LBT, Cat 2 LBT for short, is used by a communication device to send information without performing random backoff after the communication device senses that a channel is in an idle state for a period of determined time.
   **Category 3 LBT (Category 3 LBT):** LBT with random backoff with a contention window (contention window, CW) in a fixed size. The category 3 LBT, Cat 3 LBT for short, is used by a communication device to generate a random number N based on a contention window in a fixed size, and send information after the communication device senses that a channel is in an idle state for a period of time determined based on the random number N. The size of the contention window is related to a minimum value and a maximum value of N.
   **Category 4 LBT (Category 4 LBT):** LBT with random backoff with a contention window in a variable size. The category 4 LBT, Cat 4 LBT for short, is used by a communication device to generate a random number N based on a contention window in a variable size, and send information after the communication device senses that a channel is in an idle state for a period of time determined based on the random number N. The size of the contention window is related to a minimum value and a maximum value of N, and the communication device can change the size of the contention window.

A communication device in an NR-U system (NR-U device for short) complies with a 3GPP protocol, and uses LBT as a channel access mechanism. Specifically, the NR-U device uses the following several types of LBT:
**Type 1 LBT:** Cat 4 LBT. The NR-U device can access a channel and send information only after performing random backoff.

Specifically, the NR-U device (including an access network device and/or a terminal device) can send information after sensing, in sensing time (referred to as sensing slot duration (sensing slot duration) in this embodiment of this application) of defer duration (defer sensing, denoted as *T_{d}*), that a channel is idle, and after a counter *N* is zero in the following step 4. Specifically, according to the following steps, the channel is sensed to obtain additional sensing slot duration to adjust the counter *N*:
Step 1: Set *N = Nᵢₙᵢₜ,* where *Nᵢₙᵢₜ* is a random number evenly distributed between 0 and a contention window size *CWₚ* corresponding to a channel access priority class (channel access priority class, CAPC) p, and perform step 4.
Step 2: If *N* > 0 and the NR-U device (the access network device and/or the terminal device) chooses to decrease the counter progressively, set *N = N -* 1.
Step 3: Sense the channel based on a time granularity of a sensing time unit (which is referred to as a sensing slot *Tₛₗ* (it is assumed that *Tₛₗ=9 µs* in this embodiment of this application), but it is not limited in this embodiment of this application); and if the channel is idle at the sensing time granularity, perform step 4; otherwise, perform step 5.
Step 4: If *N* = 0, stop sensing the channel; otherwise, perform step 2.
Step 5: Continue sensing the channel, until it is sensed, in one *Tₛₗ* in other *T_{d}*, that the channel is busy, or it is sensed that the channel is detected as idle in all sensing slots *Tₛₗ* in other *T_{d}*.
Step 6: If the channel is detected as idle in all the sensing slots *Tₛₗ* in the other *T_{d}*, perform step 4; otherwise, perform step 5.

*T_{d}* includes duration *T_{f}* (it is assumed that *T_{f} =* 16*us,* but this is not limited in this embodiment of this application) and *mₚ* continuous *Tₛₗ* following the duration *T_{f}, CW_{min,p}* ≤ *CWₚ* ≤ *CW*_{*max*,} *ₚ, CW_{min, p}* is a minimum contention window size corresponding to the channel access priority class p, and *CWₘₐₓ*, *ₚ* is a maximum contention window size corresponding to the channel access priority class p.

The NR-U device selects *CW_{min, p}* and *CW_{max, p}* before step 1. *mₚ* , *CW_{min, p},* and *CW*_{*max*, *p*} are associated with the channel access priority class *p* of the NR-U device. Specifically, for a downlink CAPC, an association relationship between a channel access priority class p of the access network device, *mₚ, CW_{min,p}, CW_{max,p},* and *T_{m cot,p}* is described in Table 1. For an uplink CAPC, an association relationship between a channel access priority class p of the terminal device, *mₚ, CW_{min,p}, CW_{max,p},* and *T_{m cot,p}* is shown in Table 2.

**Table 1 Downlink (downlink, DL) CAPC**

| Channel access priority class (***p***) | ***mₚ*** | ***CW_{min,p}*** | ***CW_{max,p}*** | ***T_{m cot,p}*** | Allowed value of ***CWₚ*** |
|---|---|---|---|---|---|
| 1 | 1 | 3 | 7 | 2 *ms* | {3, 7} |
| 2 | 1 | 7 | 15 | 3 *ms* | {7, 15} |
| 3 | 3 | 15 | 63 | 8 *or* 10 *ms* | {15, 31, 63} |
| 4 | 7 | 15 | 1023 | 8 *or* 10 *ms* | {15, 31, 63, 127, 255, 511, 1023} |

**Table 2 UL CAPC**

| Channel access priority class **(*p*)** | ***mₚ*** | ***CW_{min,p}*** | ***CW_{max,p}*** | ***T_{m cot,p}*** | Allowed value of ***CWₚ*** |
|---|---|---|---|---|---|
| 1 | 2 | 3 | 7 | 2 ms | {3, 7} |
| 2 | 2 | 7 | 15 | 4 ms | {7, 15} |
| 3 | 3 | 15 | 1023 | 6 ms or 10 ms | {15, 31, 63, 127, 255, 511, 1023} |
| 4 | 7 | 15 | 1023 | 6 ms or 10 ms | {15, 31, 63, 127, 255, 511, 1023} |

*T_{m cot,p}* is a maximum COT value corresponding to the channel access priority class p, and is usually specified by the law and regulation. COT in which the NR-U device (the access network device and/or the terminal device) sends information on the channel cannot exceed *T_{m cot,p.}* The allowed value of *CWₚ* represents a possible contention window value corresponding to the channel access priority class.

The NR-U device maintains the contention window size *CWₚ,* and adjusts a value of *CWₚ* according to the following steps before step 1:
Step a: For each channel access priority class *p* ∈ {1,2,3,4}, set *CWₚ = CW_{min,p}.*
Step b: In a HARQ-ACK feedback value corresponding to information sent by the NR-U device in a reference subframe *k*, if at least Z=80% is determined as a NACK, increase a value of *CWₚ* corresponding to each channel access priority class *p* ∈ {1,2,3,4} to a next higher allowed value, and continue ACK/NACK determining in step b; otherwise, perform step a of setting *CWₚ = CW_{min,p},* where the reference subframe *k* is a start subframe of latest transmission performed by the NR-U device on the channel.

**Type 2A LBT:** Cat 2 LBT with a gap of 25 µs. After sensing that a channel is idle for 25 µs, the NR-U device can access the channel and send information.

**Type 2B LBT:** Cat 2 LBT with a gap of 16 µs. After sensing that a channel is idle for 16 µs, the NR-U device can access the channel and send information.

**Type 2C LBT:** Cat 1 LBT with a maximum gap of 16 µs. The NR-U device does not need to sense a channel, and can directly access the channel and send information after a switching gap of at most 16 µs in COT.

It may be understood that sending information and receiving information in this application may alternatively be replaced with sending data and receiving data. For example, sending first information may be replaced with sending first data, and receiving first information may be replaced with receiving first data. Unless otherwise specified, sending information and sending data can be interchanged, and receiving information and receiving data can be interchanged.

### 4. Sidelink control information (sidelink control information, SCI)

The SCI is classified into 1^{st}-stage SCI (1^{st}-stage SCI) and 2^{nd}-stage SCI (2^{nd}-stage SCI). The 1^{st}-stage SCI is carried on a PSCCH, and the 1^{st}-stage SCI is used to schedule the 2^{nd}-stage SCI and the PSSCH. Because an SL is a distributed system, a terminal apparatus at a receive end can decode the PSSCH only after correctly decoding the 1^{st}-stage SCI. In this embodiment of this application, information carried on the PSSCH is described as data channel information. The data channel information includes data information, the 2^{nd}-stage SCI, and the like.

To reduce complexity of blind detection (blind decoding) performed by the terminal apparatus on the PSCCH, a time-frequency resource position of the PSCCH is relatively fixed, and a format of the 1^{st}-stage SCI carried on the PSCCH is also relatively unique. In other words, the terminal apparatus does not need to perform blind detection on the time-frequency resource position of the PSCCH, and does not need to perform blind detection on SCI in different formats. The terminal apparatus only needs to detect, at a fixed PSCCH time-frequency resource position, whether the 1^{st}-stage SCI exists. The PSCCH exists in each sub-channel of each slot.

The 1^{st}-stage SCI includes a frequency resource assignment (frequency resource assignment) field and a time resource assignment (time resource assignment) field. The frequency domain resource assignment field indicates a frequency domain resource of the PSSCH, and the time domain resource assignment field indicates a time domain resource of the PSSCH. Optionally, the 1^{st}-stage SCI further includes a resource reservation period (resource reservation period) field. The resource reservation period field indicates a resource reservation period of the PSSCH. A value of the resource reservation period field is configured by a network device, pre-configured (pre-configuration), or predefined. For example, the network device indicates the time domain resource, the frequency domain resource, and the period of the PSSCH to the terminal apparatus by using radio resource control (radio resource control, RRC) signaling. Content indicated by the RRC signaling may be determined based on sl-ResourceReservePeriod.

The 2^{nd}-stage SCI is carried on the PSSCH. The 2^{nd}-stage SCI does not occupy resources of the PSCCH, a demodulation reference signal (demodulation reference signal, DMRS), and a phase tracking reference signal (phase tracking reference signal, PT-RS). The 2^{nd}-stage SCI is mainly used for a hybrid automatic repeat request (hybrid automatic repeat request, HARQ) feedback of an NR SL, for example, indicating related information about a HARQ process number (process number), a source identifier (source ID), a destination identifier (destination ID), and the like. A format of the 2^{nd}-stage SCI is indicated by a 2^{nd}-stage SCI format (2^{nd}-stage SCI format) field in the 1^{st}-stage SCI. For example, the 2^{nd}-stage SCI format field in the 1^{st}-stage SCI is shown in Table 3.

**Table 3**

| Value of a 2^{nd}-stage SCI format field (value of 2^{nd}-stage SCI format field) | 2^{nd}-stage SCI format (2^{nd}-stage SCI format) |
|---|---|
| 00 | SCI format 2-A |
| 01 | SCI format 2-B |
| 10 | Reserved (Reserved) |
| 11 | Reserved |

In Table 3, when the value of the 2^{nd}-stage SCI format field in the 1 ^{st}-stage SCI is 00, the 2^{nd}-stage SCI format is 2-A. When the value of the 2^{nd}-stage SCI format field is 01, the 2^{nd}-stage SCI format is 2-B.

It should be noted that, in this embodiment of this application, that X information is configured by the network device may be understood as one of the following two implementations: In a possible implementation, the network device configures the X information for the terminal apparatus by using the RRC signaling or a system information block (system information block, SIB) message. Alternatively, in another possible implementation, the network device indicates the X information to the terminal apparatus by using downlink control information (downlink control information, DCI). That the X information may alternatively be pre-configured may be understood as that the X information is pre-configured at delivery of the terminal apparatus. That the X information may alternatively be predefined may be understood as that the X information is defined in a communication standard protocol, a regional or national law, or a specification, and does not need to be obtained through configuration, indication, or calculation. The X information may be the resource reservation period of the PSSCH or some or all parameters in a parameter set corresponding to each piece of data in this embodiment of this application.

In an NR-U system, a size of a contention window is adjusted only for data transmission in a unicast manner. Generally, there is a HARQ feedback for data transmission in the unicast manner. However, in the NR-U system, there is no adjustment solution for setting a size of a contention window for data transmission in a multicast manner, and there may be no HARQ feedback for data transmission in the multicast manner. For an SL-U system, data is usually sent in the multicast manner, and a HARQ feedback may not be enabled. Alternatively, even if there is a HARQ feedback, there may be a problem of a transmit-receive conflict caused by a hidden node.

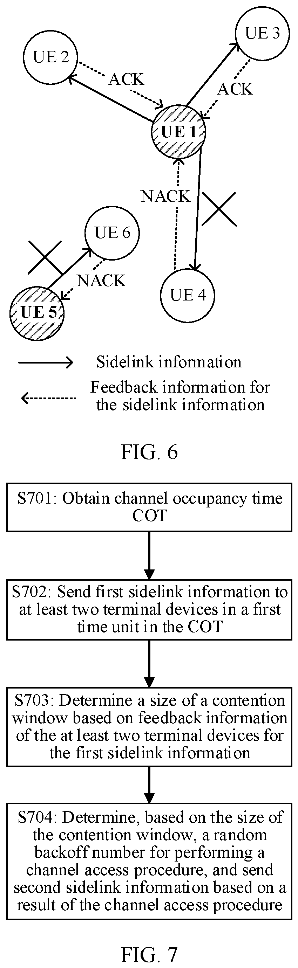

FIG. 6 is diagram of a hidden node. As shown in FIG. 6, UE 1 and UE 5 separately send sidelink information, and UE 2 and UE 3 successfully receive the sidelink information sent by the UE 1 and feed back acknowledgments ACKs. However, because of interference from the sidelink information sent by the UE 5, UE 4 cannot successfully receive the sidelink control information sent by the UE 1, and therefore feeds back a NACK. Similarly, because of interference from the sidelink information sent by the UE 1, UE 6 cannot successfully receive the sidelink control information sent by the UE 5, and therefore feeds back a NACK.

Therefore, a new contention window size adjustment solution is urgently needed, better applicable to data transmission in the multicast manner and/or data transmission without a HARQ feedback, to ensure data transmission performance.

In view of this, this application provides a communication method. The communication method in embodiments of this application is applied to the communication system in FIG. 1, FIG. 2, or FIG. 3. In the communication method in embodiments of this application, a terminal device obtains channel occupancy time COT, where the COT consists of N time units, and N is an integer greater than or equal to 1; sends first sidelink information to at least two terminal devices in a first time unit in the COT; determines a size of a contention window based on feedback information of the at least two terminal devices for the first sidelink information; and determines, based on the size of the contention window, a random backoff number for performing a channel access procedure, and sends second sidelink information based on a result of the channel access procedure. Specifically, the first sidelink information may be first sidelink information sent within reference duration, and the size of the contention window is determined based on the feedback information of the at least two terminal devices that receive the first sidelink information. Alternatively, the size of the contention window is determined based on a quantity of blind retransmission times of the first sidelink information, better applicable to data transmission in a multicast manner and/or data transmission based on blind retransmission, ensuring data transmission performance.

With reference to the drawings, the following describes in detail the method provided in embodiments of this application. In embodiments of this application, an example in which the terminal device is an SL-U device is used for description. It is worth noting that, although the SU-L device is used as an example for description in embodiments of this application, embodiments of this application are not limited thereto. The method provided in embodiments of this application can be applied only to any device that uses an unlicensed spectrum and can implement device-to-device communication. In addition, in embodiments of this application, the time unit is described by using a slot as an example. It is worth noting that, although the slot is used as an example for description in embodiments of this application, embodiments of this application has no limitation that the time unit is necessarily a slot, and the time unit may alternatively be another term, for example, a subframe or a mini-slot (Mini Slot).

As shown in FIG. 7, a method provided in an embodiment of this application includes the following steps.

S701: An SL-U device obtains channel occupancy time COT, where the COT consists of N time units, and N is an integer greater than or equal to 1.

Step S701 may be implemented by the processing unit 402 of the communication apparatus 400 by controlling the communication unit 403, or may be implemented by the processor 502 of the communication apparatus 500 by controlling the transceiver 503.

Specifically, for a manner in which the SL-U device obtains the channel occupancy time COT, refer to the foregoing descriptions.

S702: The SL-U device sends first sidelink information to at least two terminal devices in a first time unit in the COT.

Step S702 may be implemented by the processing unit 402 of the communication apparatus 400 by controlling the communication unit 403, or may be implemented by the processor 502 of the communication apparatus 500 by controlling the transceiver 503.

It may be understood that in step S702, the SL-U device sends the sidelink information to the at least two terminal devices in a multicast manner.

It may be understood that in step S702, sending the first sidelink information to the at least two terminal devices in the first time unit in the COT may be replaced with sending the first sidelink information in the multicast manner in the first time unit in the COT.

Specifically, the first time unit may be one time unit, or may be a plurality of time units. Correspondingly, the first sidelink information may be one piece of sidelink information, or may be a plurality of pieces of sidelink information. One time unit may be in one-to-one correspondence with one piece of sidelink information. At least one piece of sidelink information includes sidelink information for initial transmission and/or sidelink information for retransmission. For example, the first time unit includes five slots that are respectively numbered from a slot 0 to a slot 4, and corresponding at least one piece of sidelink information includes five pieces of sidelink information. The slot 0 and the slot 1 respectively correspond to retransmission of sidelink information 0 and sidelink information 1, and the slot 1, the slot 2, and the slot 3 respectively correspond to initial transmission of sidelink information 2, sidelink information 3, and sidelink information 4.

It may be understood that the sidelink information in this embodiment of this application may be information transmitted on a PSSCH, or information carried in a transport block in a slot. In general, the sidelink information is information sent from one terminal device to another terminal device through a sidelink.

The initial transmission herein may be that the sidelink information is not transmitted before the COT, and is initially transmitted in the COT. The retransmission herein may be understood as that the sidelink information is transmitted (initially transmitted and possibly retransmitted) before the COT, and is retransmitted again in the COT.

For example, the time unit is a slot. The first time unit may include a slot 1 and a slot 2. The SL-U device may send sidelink information 1 in the slot 1, and may send sidelink information 2 in the slot 2.

S703: The SL-U device determines a size of a contention window based on feedback information of the at least two terminal devices for the first sidelink information.

Step S703 may be implemented by the processing unit 402 of the communication apparatus 400, or may be implemented by the processor 502 of the communication apparatus 500.

Specifically, the at least two terminal devices send the feedback information for the first sidelink information to the SL-U device based on a status of receiving the first sidelink information. For a meaning of the feedback information, refer to the following descriptions.

Specifically, the size of the contention window may be represented as *CWₚ.* For a specific meaning, refer to the foregoing descriptions. p is a channel access priority class p of the SL-U device.

Specifically, the SL-U device determines the size of the contention window based on the feedback information of the at least two terminal devices that receive the first sidelink information.

Specifically, before step S703, the SL-U device determines reference duration (reference duration), where the reference duration includes the first time unit, and the reference duration meets at least one of the following conditions:
Condition a: The reference duration consists of a 1^{st} time unit to an i^{th} time unit in the COT, feedback information is obtainable in the COT for sidelink information sent in each time unit included in the reference duration, and feedback information is unobtainable in the COT for sidelink information sent in the i^{th} time unit to an N^{th} time unit, where 1 ≤ i ≤ N;
Condition b: The reference duration consists of a j^{th} time unit to an i^{th} time unit in the COT, where the j^{th} time unit is a 1^{st} time unit in the COT and in which a feedback is enabled (HARQ enable), and j ≤ i; or
Condition c that may replace Condition b: The reference duration consists of a k^{th} time unit to an m^{th} time unit in the COT, where j ≤ k ≤ m or j ≤ k ≤ m, and m ≤ N or m ≤ i. It may be understood that when k=j and m=i, Condition b is the same as Condition c.

When k = j, m < *i*, it is equivalent to that the reference duration determined in Condition a includes a first part of the time units. When k > *j*, m < *i*, it is equivalent to that the reference duration determined in Condition a includes a subsequent part of the time units.

When k = j, m > *i*, it is equivalent to that, in addition to the time units determined in Condition a, the reference duration further includes one or more time units in which feedback information is unobtainable in the COT.

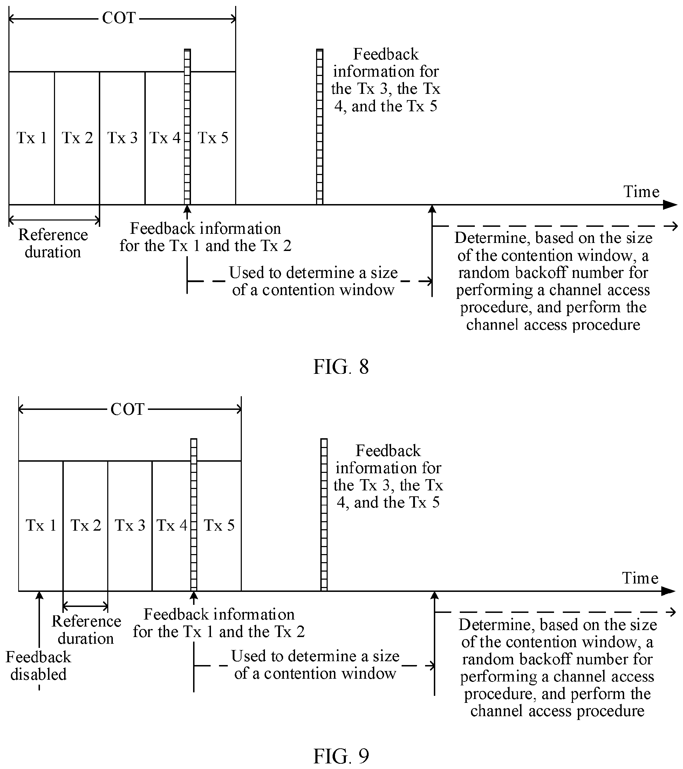

FIG. 8 shows an example of Condition a. As shown in FIG. 8, the COT includes five slots. The SL-U device may respectively send sidelink information 1 to sidelink information 5 (corresponding to Tx 1 to Tx 5 in the figure) in the slots included in the COT. The SL-U device may receive feedback information (such as an acknowledgment ACK or a negative acknowledgment NACK) for the Tx 1 and the Tx 2 in the COT. For the Tx 3 to the Tx 5, time of receiving feedback information is outside the COT. Therefore, the reference duration is slots corresponding to the Tx 1 and the Tx 2. That is, in Condition a, the reference duration is from a 1^{st} slot (corresponding to the Tx 1) to a 2^{nd} slot (corresponding to the Tx 2, that is, i=2).

FIG. 9 shows an example of Condition b. As shown in FIG. 9, the COT includes five slots. The SL-U device may respectively send sidelink information 1 to sidelink information 5 (corresponding to Tx 1 to Tx 5 in the figure) in the slots included in the COT. A slot corresponding to the Tx 1 is set as feedback disabled (HARQ disabled), and slots corresponding to the Tx 2 to the Tx 5 are slots in which a feedback is enabled (HARQ enabled). In this case, the SL-U device may receive feedback information (for example, an acknowledgment ACK or a negative acknowledgment NACK) for the Tx 2 in the COT. For the Tx 3 to the Tx 5, time of receiving feedback information is outside the COT. For the Tx 1, because a feedback is disabled, feedback information fails to be received (and does not need to be received). Therefore, the reference duration is the slot corresponding to the Tx 2. That is, in Condition b, the reference duration is a 2^{nd} slot (corresponding to the Tx 2, that is, j=2, and i=2).

That the reference duration meets at least one of Condition a, Condition b, or Condition c may be replaced with that the reference duration is defined as a time unit in at least one of Condition a, Condition b, or Condition c. It may be understood that, that the reference duration includes the first time unit may be replaced with that the first time unit is the reference duration, that is, the first time unit has a same meaning as the reference duration, or included time units are exactly the same.

By defining the reference duration, feedback information for sidelink information sent in specific time units can be more accurately controlled to determine the size of the contention window. This reduces a probability of a next transmission conflict, and further improves data transmission performance.

That the SL-U device determines the size of the contention window based on the feedback information of the at least two terminal devices that receive the first sidelink information may specifically include: The SL-U device determines the size of the contention window based on feedback information of sidelink information sent in the first time unit within the reference duration.

Specifically, the following Implementation 1 and Implementation 2 may be included:
Implementation 1: Specifically, when a first condition is met, it is determined that the size of the contention window is a preset value, or it is determined that the size of the contention window remains unchanged. When a second condition is met, the size of the contention window is increased.

The size of the contention window determined by the SL-U device is greater than or equal to the preset value, that is, the preset value is a minimum value of the size of the contention window, and may be represented as *CW_{min,p},* where p is the channel access priority class of the SL-U device. Unless otherwise specified, the preset value in each embodiment of this application is *CW_{min,p}.*

It may be understood that, in embodiments of this application, determining that the size of the contention window remains unchanged is equivalent to maintaining a size of the contention window used when a channel access procedure is performed last time.

It may be understood that after the second condition is met and the size of the contention window is increased, if the size of the contention window is greater than a maximum value *CW_{max,p}* of the contention window, the size of the contention window is set to the maximum value. That is, a size of the contention window after the increase needs to be less than or equal to the maximum value. Unless otherwise specified, the size of the contention window determined in each embodiment of this application is less than or equal to the maximum value.

Specifically, the first condition includes: The feedback information of each terminal device in the at least two terminal devices for the at least one piece of sidelink information includes at least one acknowledgment ACK. Correspondingly, the second condition includes: Feedback information of at least one terminal device in at least one terminal device for the at least one piece of sidelink information includes only a negative acknowledgment NACK.

It may be understood that the first sidelink information consists of the at least one piece of sidelink information.

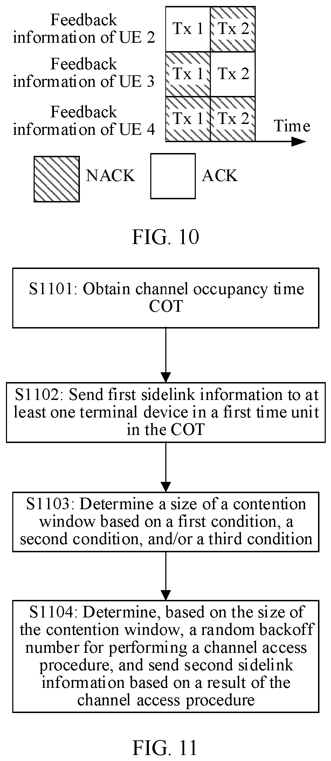

An example in which the reference duration is a slot that meets the foregoing Condition a (referring to FIG. 8) is used. The SL-U device sends two pieces of sidelink information (where the first sidelink information includes two pieces of sidelink information, namely, Tx 1 and Tx 2) to at least two terminal devices (for example, UE 2 to UE 4) in two slots (where the first time unit includes two slots) included in the reference duration, and feedback information received by the SL-U device from the UE 2 to the UE 4 is shown in FIG. 10. In this case, the SL-U device determines that the second condition is met (that is, feedbacks of the UE 4 for the Tx 1 and the Tx 2 include only NACKs). Therefore, the SL-U device may determine to increase the size of the contention window. It may be understood that, if feedback information of the UE 4 for the Tx 1 and the Tx 2 includes at least one ACK (not shown in the figure), the SL-U device determines that the first condition is met, and determines that the size of the contention window is the preset value, or determines that the size of the contention window remains unchanged.

It may be understood that when the reference duration includes only one slot, the first condition is equivalent to that all terminal devices in the at least two terminal devices feed back ACKs.

It may be understood that when the reference duration meets the foregoing Condition b and Condition c, the size of the contention window may also be determined with reference to the first condition and the second condition. Details are not described again.

Implementation 1 provides an SL-U contention window adjustment solution in a multicast scenario, to be specific, a feedback is performed based on a worst UE feedback status in multicast, and a possible case in which a hidden terminal device causes another terminal device to keep failing receiving is considered. The contention window is adjusted based on a worst feedback of a terminal device, so that a problem of a conflict caused by a same contention window in multicast can be effectively resolved.

Implementation 2: Specifically, when a third condition is met, it is determined that the size of the contention window is a preset value; when a fourth condition is met, it is determined that the size of the contention window remains unchanged; or when a fifth condition is met, the size of the contention window is increased.

Specifically, the third condition includes: A proportion of an ACK included in all feedback information of all terminal devices in the at least two terminal devices to all the feedback information is greater than or equal to a first threshold. The fourth condition includes: A proportion of an ACK included in all feedback information of all terminal devices in the at least two terminal devices to all the feedback information is less than a first threshold and greater than or equal to a second threshold. The fifth condition includes: A proportion of an ACK included in all feedback information of all terminal devices in the at least two terminal devices to all the feedback information is less than a second threshold. Values of the first threshold and the second threshold are 0 to 1.

An example in which the reference duration is a slot that meets the foregoing Condition a (referring to FIG. 8) is still used. The SL-U device sends two pieces of sidelink information (where the first sidelink information includes two pieces of sidelink information, namely, Tx 1 and Tx 2) to at least two terminal devices (for example, UE 2 to UE 4) in two slots (where the first time unit includes two slots) included in the reference duration, and feedback information received by the SL-U device from the UE 2 to the UE 4 is shown in FIG. 10. Assuming that the first threshold is 80% (0.8), and the second threshold is 50% (0.5), the SL-U device determines that the fifth condition is met (as shown in FIG. 10, a quantity of ACKs is 2, a total quantity of pieces of feedback information is 6, and the proportion of ACKs is 1/3, less than 50%). Therefore, the SL-U device may determine to increase the size of the contention window. It may be understood that, if feedback information of the UE 4 for the Tx 1 and the Tx 2 is all ACKs (not shown in the figure), the SL-U device determines that the fourth condition is met (a quantity of ACKs is 4, a total quantity of pieces of feedback information is 6, and the proportion of ACKs is 2/3, greater than 50% and less than 80%), and determines that the size of the contention window remains unchanged.

It may be understood that the first threshold in the third condition may be configured to 1. In this case, adjusting the contention window may be only keeping the size unchanged, or increasing the size of the contention window, without an adjustment manner of adjusting to the preset value.

It may be understood that the first threshold and the second threshold may be equal. In this case, the adjustment manner of the contention window is only adjusting to the preset value, or increasing the size of the contention window, without a case of keeping the size of the contention window unchanged.

It may be understood that the third condition, the fourth condition, and the fifth condition may be replaced with the following:
The third condition includes: A proportion of a NACK included in all feedback information of all terminal devices in the at least two terminal devices to all the feedback information is less than a first threshold. The fourth condition includes: A proportion of a NACK included in all feedback information of all terminal devices in the at least two terminal devices to all the feedback information is greater than or equal to a first threshold and less than a second threshold. The fifth condition includes: A proportion of a NACK included in all feedback information of all terminal devices in the at least two terminal devices to all the feedback information is greater than or equal to a second threshold. Values of the first threshold and the second threshold are 0 to 1.

An example in which the reference duration is a slot that meets the foregoing Condition a (referring to FIG. 8) is still used. The SL-U device sends two pieces of sidelink information (where the first sidelink information includes two pieces of sidelink information, namely, Tx 1 and Tx 2) to at least two terminal devices (for example, UE 2 to UE 4) in two slots (where the first time unit includes two slots) included in the reference duration, and feedback information received by the SL-U device from the UE 2 to the UE 4 is shown in FIG. 10. Assuming that the first threshold is 20% (0.2), and the second threshold is 50% (0.5), the SL-U device determines that the fifth condition is met (as shown in FIG. 10, a quantity of NACKs is 4, a total quantity of pieces of feedback information is 6, and the proportion of NACKs is 2/3, greater than 50%). Therefore, the SL-U device may determine to increase the size of the contention window. It may be understood that, if feedback information of the UE 4 for the Tx 1 and the Tx 2 is all ACKs (not shown in the figure), the SL-U device determines that the fourth condition is met (a quantity of NACKs is 2, a total quantity of pieces of feedback information is 6, and the proportion of NACKs is 1/3, greater than 20% and less than 50%), and determines that the size of the contention window remains unchanged.

It may be understood that the third condition, the fourth condition, and the fifth condition may alternatively be replaced with the following:
The third condition includes: A ratio of ACKs to NACKs included in all feedback information of all terminal devices in the at least two terminal devices is greater than or equal to a first threshold. The fourth condition includes: A ratio of ACKs to NACKs included in all feedback information of all terminal devices in the at least two terminal devices is less than a first threshold and greater than or equal to a second threshold. The fifth condition includes: A ratio of ACKs to NACKs included in all feedback information of all terminal devices in the at least two terminal devices is less than a second threshold. Values of the first threshold and the second threshold are greater than or equal to 0.

An example in which the reference duration is a slot that meets the foregoing Condition a (referring to FIG. 8) is still used. The SL-U device sends two pieces of sidelink information (where the first sidelink information includes two pieces of sidelink information, namely, Tx 1 and Tx 2) to at least two terminal devices (for example, UE 2 to UE 4) in two slots (where the first time unit includes two slots) included in the reference duration, and feedback information received by the SL-U device from the UE 2 to the UE 4 is shown in FIG. 10. Assuming that the first threshold is 4, and the second threshold is 1, the SL-U device determines that the fifth condition is met (as shown in FIG. 10, a quantity of ACKs is 2, a quantity of NACKs is 4, and ACKs/NACKs=1/2, less than 4). Therefore, the SL-U device may determine to increase the size of the contention window. It may be understood that, if feedback information of the UE 4 for the Tx 1 and the Tx 2 is all ACKs (not shown in the figure), the SL-U device determines that the fourth condition is met (a quantity of ACKs is 4, a quantity of NACKs is 2, and ACKs/NACKs=2, greater than 1), and determines that the size of the contention window remains unchanged.

In Implementation 2, in a multicast scenario, a higher proportion of a fed back NACK indicates a higher probability of a potential data sending conflict, and a higher corresponding necessity of adjusting the contention window. A probability of a sending conflict may be indirectly determined by calculating a proportion of transmission failures in feedbacks, and the size of the contention window is further determined to be adjusted by comparing the probability with the threshold. This reduces a probability of a conflict in multicast, and improves system resource utilization.

It may be understood that, in embodiments of this application, the first threshold and/or the second threshold are/is configured by a resource pool. Specifically, the threshold may be pre-configured by using a protocol, or may be obtained by receiving configuration information. This is not limited in this application.

It may be understood that, in embodiments of this application, that the feedback information is an ACK or the feedback information includes an ACK may be that the SL-U device explicitly receives an ACK of another terminal device for sidelink information, or the SL-U device receives no NACK (for a NACK-Only scenario) of another terminal device for sidelink information. This is not limited in this application. The NACK-Only means that a terminal device that receives sidelink information feeds back only a NACK. If the terminal device successfully receives the sidelink information, the terminal device does not feed back an ACK. In this case, provided that the terminal device does not feed back the NACK, the SL-U device that sends the sidelink information considers that the feedback information is an ACK (that is, the sidelink information is successfully sent, or the sidelink information is successfully received).

Similarly, in embodiments of this application, that the feedback information is a NACK or the feedback information includes a NACK may be that the SL-U device explicitly receives a NACK of another terminal device for sidelink information, or the SL-U device receives no ACK (for an ACK-Only scenario) of another terminal device for sidelink information. This is not limited in this application. The ACK-Only means that a terminal device that receives sidelink information feeds back only an ACK. If the terminal device successfully receives the sidelink information, the terminal device feeds back the ACK. If the terminal device fails to receive the sidelink information, the terminal device does not perform a feedback. In this case, provided that the terminal device does not feed back the ACK, the SL-U device that sends the sidelink information considers that the feedback information is a NACK (that is, the sidelink information is not successfully sent, or the sidelink information is not successfully received).

S704: Determine, based on the size of the contention window, a random backoff number for performing a channel access procedure, and send second sidelink information based on the channel access procedure.

Step S704 may be implemented by the processing unit 402 of the communication apparatus 400 by controlling the communication unit 403, or may be implemented by the processor 502 of the communication apparatus 500 by controlling the transceiver 503.

A specific channel access procedure may be the foregoing LBT process. Details are not described herein again.

Sending the second sidelink information based on the channel access procedure may be understood as preempting a channel resource by using LBT, and then sending the second sidelink information.

It may be understood that the SL-U device sends the second sidelink information to the at least two terminal devices.

As described above, in the embodiment shown in FIG. 7, the size of the contention window can be more accurately determined in the multicast scenario, to reduce a conflict probability and improve system performance.

It should be noted that, in the communication method shown in FIG. 7, if a step of determining the reference duration is included, S702 may be replaced with sending the first sidelink information to at least one terminal device in the first time unit in the COT. To be specific, the SL-U device may send the first sidelink information to one terminal device, that is, send the first sidelink information in a unicast manner, or the SL-U device may send the first sidelink information to two or more terminal devices, that is, send the first sidelink information in a multicast manner. Correspondingly, S703 may be replaced with determining the size of the contention window based on the feedback information of the at least one terminal device for the first sidelink information.

Specifically, when the SL-U device sends the first sidelink information in the multicast manner, for determining the size of the contention window and conditions, refer to S703. When the SL-U device sends the first sidelink information to one terminal device in the unicast manner, the first condition in Implementation 1 may be simplified based on the first condition in Implementation 1 in S703 as follows: Feedback information received by the SL-U device is all ACKs. The second condition may be simplified as follows: Feedback information received by the SL-U device is all NACKs.

Similarly, the third condition in Implementation 2 may be simplified based on the third condition in Implementation 2 in S703 as follows: A proportion of an ACK in feedback information received by the SL-U device to all the feedback information is greater than or equal to a first threshold. The third condition may be simplified as follows: A proportion of an ACK in feedback information received by the SL-U device to all the feedback information is less than a first threshold and greater than or equal to a second threshold. The fifth condition may be simplified as follows: A proportion of an ACK in feedback information received by the SL-U device to all the feedback information is less than a second threshold.

Other replacement manners of the third condition, the fourth condition, and the fifth condition are similar. Details are not described.

In this embodiment, the size of the contention window can be accurately determined by determining the reference duration, improving data transmission performance. This embodiment is applicable to unicast and multicast scenarios.

With reference to FIG. 11, the following describes another communication method provided in an embodiment of this application. The method is applicable to a scenario in which a feedback is disabled and an SL-U device performs blind retransmission. A size of a contention window may be determined based on a quantity of blind retransmission times of first sidelink information, so that the size of the contention window is accurately determined without a feedback, improving data transmission performance.

The method specifically includes the following steps.

S1101: The SL-U device obtains channel occupancy time COT, where the COT consists of N time units, and N is an integer greater than or equal to 1.

Specifically, for step S1101, refer to the foregoing S701. Details are not described.

S1102: The SL-U device sends first sidelink information to at least one terminal device in a first time unit in the COT.

Specifically, for step S1101, refer to the foregoing S702. Different from S702, in step S1101, the SL-U device may send the first sidelink information to one terminal device, that is, send the first sidelink information in a unicast manner, or the SL-U device may send the first sidelink information to two or more terminal devices, that is, send the first sidelink information in a multicast manner.

The first time unit includes at least one time unit, the first sidelink information includes at least one piece of sidelink information, the at least one time unit is in one-to-one correspondence with the at least one piece of sidelink information, and the at least one piece of sidelink information includes at least one piece of third sidelink information and/or at least one piece of fourth sidelink information.

Specifically, the third sidelink information includes sidelink information whose quantity of transmission times is equal to 1, that is, sidelink information that is not transmitted in previous COT and that is initially transmitted in current COT. The fourth sidelink information includes sidelink information whose quantity of transmission times is greater than 1, that is, sidelink information that is transmitted in previous COT and that is transmitted again in current COT. Therefore, the third sidelink information is also referred to as sidelink information for initial transmission (initial transmission), and the fourth sidelink information is also referred to as sidelink information for retransmission.

It may be understood that the third sidelink information is sidelink information whose quantity of transmission times is equal to 1, and the fourth sidelink information is sidelink information whose quantity of transmission times is greater than 1. For example, it is assumed that in five slots included in the first time unit in the COT, the SL-U device sends sidelink information 1, sidelink information 2, sidelink information 3, sidelink information 4, and sidelink information 5, where the sidelink information 1, the sidelink information 2, and the sidelink information 3 are all sidelink information for initial transmission, and the sidelink information 4 and the sidelink information 5 are both sidelink information for retransmission. In this case, the third sidelink information includes the sidelink information 1, the sidelink information 2, and the sidelink information 3.

The at least one piece of sidelink information is sent to the at least one terminal device in the at least one time unit in the COT.

S1103: The SL-U device determines the size of the contention window.

Step S1103 may be implemented by the processing unit 402 of the communication apparatus 400, or may be implemented by the processor 502 of the communication apparatus 500.

Specifically,
when a third condition is met, it is determined that the size of the contention window is a preset value; when a fourth condition is met, it is determined that the size of the contention window remains unchanged, or when a fifth condition is met, the size of the contention window is increased.

The third condition includes: A ratio of a quantity of pieces of fourth sidelink information to a quantity of pieces of third sidelink information is less than a first threshold.

The fourth condition includes: A ratio of a quantity of pieces of fourth sidelink information to a quantity of pieces of third sidelink information is greater than or equal to a first threshold and less than a second threshold.

The fifth condition includes: A ratio of a quantity of pieces of fourth sidelink information to a quantity of pieces of third sidelink information is greater than or equal to a second threshold. Values of the first threshold and the second threshold are 0 to 1.

The size of the contention window is greater than or equal to the preset value, the fourth sidelink information belongs to the first sidelink information, the fourth sidelink information includes sidelink information for retransmission, the first sidelink information includes at least one piece of sidelink information, the third sidelink information belongs to the first sidelink information, and the third sidelink information is sidelink information for initial transmission.

It may be understood that retransmission is equivalent to that a quantity of transmission times is greater than 1, that is, transmission has been performed at least one time before the COT. Initial transmission is equivalent to that a quantity of transmission times is equal to 1, that is, no transmission is performed before the COT.

It may be understood that a quantity of pieces of at least one piece of sidelink information is greater than or equal to the quantity of pieces of third sidelink information, and the quantity of pieces of third sidelink information is greater than or equal to the quantity of pieces of fourth sidelink information.

For example, it is assumed that in five slots included in the first time unit in the COT, the SL-U device sends sidelink information 1, sidelink information 2, sidelink information 3, sidelink information 4, and sidelink information 5, where the sidelink information 1, the sidelink information 2, and the sidelink information 3 are all sidelink information for initial transmission, and the sidelink information 4 and the sidelink information 5 are both sidelink information for retransmission. In this case, the third sidelink information includes the sidelink information 1, the sidelink information 2, and the sidelink information 3, and the fourth sidelink information includes the sidelink information 4 and the sidelink information 5. Assuming that the first threshold is 20% (0.2), and the second threshold is 50% (0.5), the SL-U device determines that the fifth condition is met (the quantity of pieces of fourth sidelink information is 2, the quantity of pieces of third sidelink information is 3, and a proportion of NACKs is 2/3, greater than 50%). Therefore, the SL-U device may determine to increase the size of the contention window.

For another example, it is assumed that in four slots included in the first time unit in the COT, the SL-U device sends sidelink information 1, sidelink information 2, sidelink information 3, and sidelink information 4, where the sidelink information 1, the sidelink information 2, and the sidelink information 3 are all sidelink information for initial transmission, and the sidelink information 4 is sidelink information for retransmission. In this case, the third sidelink information includes the sidelink information 1, the sidelink information 2, and the sidelink information 3, and the fourth sidelink information includes only the sidelink information 4. Assuming that the first threshold is 20% (0.2), and the second threshold is 50% (0.5), the SL-U device determines that the fourth condition is met (the quantity of pieces of fourth sidelink information is 1, the quantity of pieces of third sidelink information is 3, and a proportion of NACKs is 1/3, less than 50%). Therefore, the SL-U device may determine that the size of the contention window remains unchanged.

It may be understood that, when the first threshold is set to 0, and the second threshold is set to 1, the third condition is equivalent to that the at least one piece of sidelink information included in the first sidelink information is different sidelink information (that is, all the sidelink information is for initial transmission and there is no sidelink information for blind retransmission). In this case, the third condition is met, and the SL-U device determines that the size of the contention window is the preset value. The fifth condition is equivalent to that the at least one piece of sidelink information included in the first sidelink information has undergone blind retransmission in the COT. The fourth condition is equivalent to that some of the at least one piece of sidelink information included in the first sidelink information has undergone blind retransmission in the COT.

It may be understood that the third condition, the fourth condition, and the fifth condition may alternatively be replaced with the following:
The third condition includes: A quantity of sending times of third sidelink information is less than a first threshold. The fourth condition includes: A quantity of sending times of third sidelink information is greater than or equal to a first threshold and less than a second threshold. The fifth condition includes: A quantity of sending times of third sidelink information is greater than or equal to a second threshold. Values of the first threshold and the second threshold are integers greater than 0.

The size of the contention window is greater than or equal to the preset value, the third sidelink information belongs to the first sidelink information, and the third sidelink information is sidelink information with a maximum quantity of transmission times.

For example, it is assumed that in five slots included in the first time unit in the COT, the SL-U device sends sidelink information 1, sidelink information 2, sidelink information 3, sidelink information 4, and sidelink information 5, where the sidelink information 1, the sidelink information 2, and the sidelink information 3 are all sidelink information for initial transmission (that is, no transmission is performed before the COT), the sidelink information 4 is sidelink information for 1^{st} retransmission (that is, initial transmission has been performed before the COT), the sidelink information 5 is sidelink information for 2^{nd} retransmission (that is, initial transmission has been performed and retransmission has been performed once before the COT), and a corresponding quantity of sending times of the third sidelink information is 3. Assuming that the first threshold is 4, and the second threshold is 5, the SL-U device determines that the third condition is met (the quantity of sending times of the third sidelink information is 3, less than the first threshold 4). Therefore, the SL-U device may determine that the size of the contention window is the preset value.

For example, it is assumed that in five slots included in the first time unit in the COT, the SL-U device sends sidelink information 1, sidelink information 2, sidelink information 3, sidelink information 4, and sidelink information 5, where the sidelink information 1, the sidelink information 2, and the sidelink information 3 are all sidelink information for initial transmission, the sidelink information 4 is sidelink information for 3^{rd} retransmission, the sidelink information 5 is sidelink information for 2^{nd} retransmission, and a corresponding quantity of sending times of the third sidelink information is 4. Assuming that the first threshold is 3, and the second threshold is 5, the SL-U device determines that the fourth condition is met (the quantity of sending times of the third sidelink information is 4, greater than the first threshold 3 but less than the second threshold 5). Therefore, the SL-U device may determine that the size of the contention window remains unchanged.

Alternatively, the third sidelink information may be sidelink information with a maximum quantity of transmission times before the COT. Compared with the foregoing descriptions, transmission in the COT is not considered (equivalent to the foregoing described quantity of sending times minus 1). Others are similar. Details are not described.

Alternatively, in this step, the following method may be used to determine the size of the contention window:
determining that the size of the contention window is the preset value when the at least one piece of sidelink information is transmitted for a 1^{st} time;
determining that the size of the contention window remains unchanged when the at least one piece of sidelink information is transmitted for a 2^{nd} time; and/or
determining to increase the size of the contention window when the at least one piece of sidelink information is transmitted for an x^{th} time, where X>2.

Further, the determining to increase the size of the contention window when the at least one piece of sidelink information is transmitted for an X^{th} time includes:
determining that the size of the contention window is increased by X1 times when X is less than or equal to a fourth threshold, where X1 is an integer greater than 1; and/or
determining that the size of the contention window is increased by X2 times when X is greater than a fourth threshold, where X2 is an integer greater than or equal to X1.

Optionally, in this embodiment of this application, all the N time units in the COT are time units in which a feedback is disabled; or none of sidelink information sent in the N time units in the COT can have feedback information in the COT.

It may be understood that the 1^{st} transmission, the 2^{nd} transmission, and the X^{th} transmission herein are transmission times (including initial transmission and possible retransmission) of the sidelink information until current COT (transmission in the current COT may be included, or transmission in the current COT may not be included).

Alternatively, in this step, the following method may be used to determine the size of the contention window:
The SL-U device determines the size of the contention window based on time unit association information and/or user identifier (Identifier, ID) information.

The time unit association information includes at least one of the following:
(1) a system frame number (system frame number, SFN) of a system frame in which the time unit is located; or
(2) a direct frame number (direct frame number, DFN) of a direct frame in which the time unit is located.

The user ID information is a unique identifier of a user.

A length of the SFN is 10 bits (bits), and a specific value of the SFN ranges from 0 to 1023. When the value of the SFN reaches the maximum value 1023, the SFN is numbered from 0 again. One system frame may include 10 subframes, duration of one subframe is 1 ms, and one system frame may include different quantities of slots based on different subcarrier spacings. For example, when the subcarrier spacing is 30 kHz, one system frame includes 20 slots. In addition, after being synchronized with a network device, the terminal device may determine the SFN. Similarly, after being synchronized with a satellite navigation system (global navigation satellite system, GNSS), the terminal device may determine the DFN. For different terminal devices, SFNs or DFNs in which a same slot is located are the same.

In a possible implementation, an optional quantity M of contention windows CWp is determined based on a channel access priority class CAPC, a modulo operation is performed based on (SFN+ID)%M to obtain an index value, and a random backoff value that currently needs to be selected is determined based on the index value.

For example, assuming that the SFN of the SL-U device in the COT is 102, an ID of the SL-U device is 5, and it is determined, based on a current channel access priority class CAPC=4, that there are seven optional values in total: {15, 31, 63, 127, 255, 511, 1023}, the optional quantity M=7. In this case, index=(102+5)%7=2, and the set {15, 31, 63, 127, 255, 511, 1023} is sequenced according to indexes 0 to 6. It can be learned that CWp corresponding to index=2 is 63. In this case, for this channel access procedure, it is determined that the size of the contention window is 63.

In a possible implementation, an optional quantity M of contention windows CWp is determined based on a channel access priority class CAPC, a modulo operation is performed based on SFN%M to obtain an index value, and a random backoff value that currently needs to be selected is determined based on the index value.

In a possible implementation, an optional quantity M of contention windows CWp is determined based on a channel access priority class CAPC, a modulo operation is performed based on ID%M to obtain an index value, and a random backoff value that currently needs to be selected is determined based on the index value.

S1104: Determine, based on the size of the contention window, a random backoff number for performing a channel access procedure, and send second sidelink information based on the channel access procedure.

Specifically, for step S1104, refer to the foregoing S704. Details are not described.

As described above, in the embodiment shown in FIG. 11, the size of the contention window can be more accurately determined in the unicast or multicast scenario, to reduce a conflict probability and improve system performance.

It may be understood that, in embodiments of this application, the third threshold, the fourth threshold, and/or the fifth threshold are/is configured by a resource pool. Specifically, the threshold may be pre-configured by using a protocol, or may be obtained by receiving configuration information. This is not limited in this application.

It is worth noting that, it may be understood that, in embodiments of this application, when compared with the threshold, "less than" may be replaced with "less than or equal to", and correspondingly, "greater than or equal to" may be replaced with "greater than". This is not limited in embodiments of this application.

It is worth noting that consecutive slots mentioned in this application are logically consecutive slots, and may be consecutive slots or discrete slots physically. This is not limited in this application.

This application is described with reference to the flowcharts and/or block diagrams of the method, the apparatus, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more procedures in the flowcharts and/or in one or more blocks in the block diagrams.

These computer program instructions may be stored in a computer-readable memory that can indicate the computer or any other programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
obtaining channel occupancy time COT, wherein the COT consists of N time units, and N is an integer greater than or equal to 1;
sending first sidelink information to at least two terminal devices in a first time unit in the COT;
determining a size of a contention window based on feedback information of the at least two terminal devices for the first sidelink information; and
determining, based on the size of the contention window, a random backoff number for performing a channel access procedure, and sending second sidelink information based on the channel access procedure.

2. The method according to claim 1, wherein the first time unit comprises at least one time unit, the first sidelink information comprises at least one piece of sidelink information, and the at least one time unit is in one-to-one correspondence with the at least one piece of sidelink information; and
the sending first sidelink information to at least two terminal devices in a first time unit in the COT; and determining a size of a contention window based on feedback information for the first sidelink information comprises:
sending the at least one piece of sidelink information to the at least two terminal devices in the at least one time unit, and receiving feedback information of the at least two terminal devices for the at least one piece of sidelink information; and
when a first condition is met, determining that the size of the contention window is a preset value, or determining that the size of the contention window remains unchanged, wherein the first condition comprises: the feedback information of each terminal device in the at least two terminal devices for the at least one piece of sidelink information comprises at least one acknowledgment ACK; or
when a second condition is met, increasing the size of the contention window, wherein the second condition comprises: feedback information of at least one terminal device in the at least two terminal devices for the at least one piece of sidelink information comprises only a negative acknowledgment NACK, wherein
the size of the contention window is greater than or equal to the preset value.

3. The method according to claim 1, wherein the first time unit comprises at least one time unit, the first sidelink information comprises at least one piece of sidelink information, and the at least one time unit is in one-to-one correspondence with the at least one piece of sidelink information; and
the sending first sidelink information to at least two terminal devices in a first time unit in the COT; and determining a size of a contention window based on feedback information for the first sidelink information comprises:
sending the at least one piece of sidelink information to the at least two terminal devices in the at least one time unit, and receiving feedback information of the at least one terminal device for the at least one piece of sidelink information; and
when a third condition is met, determining that the size of the contention window is a preset value, wherein the third condition comprises: a proportion of an ACK comprised in all feedback information of all terminal devices in the at least two terminal devices to all the feedback information is greater than or equal to a first threshold;
when a fourth condition is met, determining that the size of the contention window remains unchanged, wherein the fourth condition comprises: a proportion of an ACK comprised in all feedback information of all terminal devices in the at least one terminal device to all the feedback information is less than the first threshold and greater than or equal to a second threshold; or
when a fifth condition is met, increasing the size of the contention window, wherein the fifth condition comprises: a proportion of an ACK comprised in all feedback information of all terminal devices in the at least one terminal device to all the feedback information is less than the second threshold, wherein
the size of the contention window is greater than or equal to the preset value.

4. The method according to any one of claims 1 to 3, wherein the method further comprises:
determining reference duration, wherein the reference duration comprises the first time unit, and the reference duration is defined as follows:
the reference duration consists of a 1^{st} time unit to an i^{th} time unit in the COT, wherein feedback information is obtainable in the COT for sidelink information sent in each time unit comprised in the reference duration, feedback information is unobtainable in the COT for sidelink information sent in the i^{th} time unit to an N^{th} time unit, and 1 ≤ i ≤ N;
or
the reference duration consists of a j^{th} time unit to the i^{th} time unit in the COT, wherein the j^{th} time unit is a 1^{st} time unit in the COT and in which a feedback is enabled, j ≤ i, and 1 ≤ i ≤ N.

5. The method according to claim 4, wherein at least one of the first threshold and the second threshold is configured by a resource pool.

6. The method according to claim 2 or 3, wherein that the feedback information comprises the ACK is specifically that an acknowledgment corresponding to the first sidelink information is received, or no negative acknowledgment corresponding to the first sidelink information is received.

7. A communication method, comprising:
obtaining channel occupancy time COT, wherein the COT consists of N time units, and N is an integer greater than or equal to 1;
sending first sidelink information to at least one terminal device in a first time unit in the COT, wherein the first time unit comprises at least one time unit, the first sidelink information comprises at least one piece of sidelink information, and the at least one time unit is in one-to-one correspondence with the at least one piece of sidelink information;
determining a size of a contention window, and
when a third condition is met, determining that the size of the contention window is a preset value, wherein the third condition comprises: a ratio of a quantity of pieces of fourth sidelink information to a quantity of pieces of third sidelink information is less than a first threshold;
when a fourth condition is met, determining that the size of the contention window remains unchanged, wherein the fourth condition comprises: a ratio of a quantity of pieces of fourth sidelink information to a quantity of pieces of third sidelink information is greater than or equal to a first threshold and less than a second threshold; or
when a fifth condition is met, increasing the size of the contention window, wherein the fifth condition comprises: a ratio of a quantity of pieces of fourth sidelink information to a quantity of pieces of third sidelink information is greater than or equal to a second threshold, wherein
the size of the contention window is greater than or equal to the preset value, the third sidelink information belongs to the first sidelink information, the third sidelink information comprises sidelink information whose quantity of transmission times is equal to 1, the fourth sidelink information belongs to the first sidelink information, and the fourth sidelink information comprises sidelink information whose quantity of transmission times is greater than 1; and
determining, based on the size of the contention window, a random backoff number for performing a channel access procedure, and sending second sidelink information based on the channel access procedure.

8. A communication method, comprising:
obtaining channel occupancy time COT, wherein the COT consists of N time units, and N is an integer greater than or equal to 1;
sending first sidelink information to at least one terminal device in a first time unit in the COT, wherein the first time unit comprises at least one time unit, the first sidelink information comprises at least one piece of sidelink information, and the at least one time unit is in one-to-one correspondence with the at least one piece of sidelink information;
determining a size of a contention window, and
when a third condition is met, determining that the size of the contention window is a preset value, wherein the third condition comprises: a quantity of sending times of third sidelink information is less than a first threshold;
when a fourth condition is met, determining that the size of the contention window remains unchanged, wherein the fourth condition comprises: a quantity of sending times of the third sidelink information is greater than or equal to a first threshold and less than a second threshold; or
when a fifth condition is met, increasing the size of the contention window, wherein the fifth condition comprises: a quantity of sending times of the third sidelink information is greater than or equal to a second threshold, wherein
the size of the contention window is greater than or equal to the preset value, the third sidelink information belongs to the first sidelink information, and the third sidelink information is sidelink information with a maximum quantity of transmission times; and
determining, based on the size of the contention window, a random backoff number for performing a channel access procedure, and sending second sidelink information based on the channel access procedure.

9. A communication method, comprising:
obtaining channel occupancy time COT, wherein the COT consists of N time units, and N is an integer greater than or equal to 1;
determining reference duration, wherein the reference duration comprises the first time unit, and the reference duration is defined as follows:
the reference duration consists of a 1^{st} time unit to an i^{th} time unit in the COT, wherein feedback information is obtainable in the COT for sidelink information sent in each time unit comprised in the reference duration, feedback information is unobtainable in the COT for sidelink information sent in the i^{th} time unit to an N^{th} time unit, and 1 ≤ i ≤ N;
or
the reference duration consists of a j^{th} time unit to the i^{th} time unit in the COT, wherein the j^{th} time unit is a 1^{st} time unit in the COT and in which a feedback is enabled, and j ≤ i;
sending first sidelink information to at least one terminal device in the first time unit in the COT, wherein the first time unit comprises at least one time unit, the first sidelink information comprises at least one piece of sidelink information, and the at least one time unit is in one-to-one correspondence with the at least one piece of sidelink information;
determining a size of a contention window based on feedback information of the at least one terminal device for the first sidelink information; and
determining, based on the size of the contention window, a random backoff number for performing a channel access procedure, and sending second sidelink information based on the channel access procedure.

10. A communication apparatus, comprising a processor and a transceiver, wherein
the processor is configured to obtain channel occupancy time COT, wherein the COT consists of N time units, and N is an integer greater than or equal to 1;
the transceiver is configured to send first sidelink information to at least two terminal devices in a first time unit in the COT;
the processor is further configured to: determine a size of a contention window based on feedback information of the at least two terminal devices for the first sidelink information; and
determine, based on the size of the contention window, a random backoff number for performing a channel access procedure; and
the transceiver is further configured to send second sidelink information based on the channel access procedure.

11. The communication apparatus according to claim 10, wherein the first time unit comprises at least one time unit, the first sidelink information comprises at least one piece of sidelink information, and the at least one time unit is in one-to-one correspondence with the at least one piece of sidelink information;
the transceiver is specifically configured to: send the at least one piece of sidelink information to the at least two terminal devices in the at least one time unit, and receive feedback information of the at least two terminal devices for the at least one piece of sidelink information; and
the processor is specifically configured to:
when a first condition is met, determine that the size of the contention window is a preset value, or determine that the size of the contention window remains unchanged, wherein the first condition comprises: the feedback information of each terminal device in the at least two terminal devices for the at least one piece of sidelink information comprises at least one acknowledgment ACK; or
when a second condition is met, increase the size of the contention window, wherein the second condition comprises: feedback information of at least one terminal device in the at least two terminal devices for the at least one piece of sidelink information comprises only a negative acknowledgment NACK, wherein
the size of the contention window is greater than or equal to the preset value.

12. The communication apparatus according to claim 10, wherein the first time unit comprises at least one time unit, the first sidelink information comprises at least one piece of sidelink information, and the at least one time unit is in one-to-one correspondence with the at least one piece of sidelink information;
the transceiver is specifically configured to: send the at least one piece of sidelink information to the at least two terminal devices in the at least one time unit, and receive feedback information of the at least one terminal device for the at least one piece of sidelink information; and
the processor is specifically configured to:
when a third condition is met, determine that the size of the contention window is a preset value, wherein the third condition comprises: a proportion of an ACK comprised in all feedback information of all terminal devices in the at least two terminal devices to all the feedback information is greater than or equal to a first threshold;
when a fourth condition is met, determine that the size of the contention window remains unchanged, wherein the fourth condition comprises: a proportion of an ACK comprised in all feedback information of all terminal devices in the at least one terminal device to all the feedback information is less than the first threshold and greater than or equal to a second threshold; or
when a fifth condition is met, increase the size of the contention window, wherein the fifth condition comprises: a proportion of an ACK comprised in all feedback information of all terminal devices in the at least one terminal device to all the feedback information is less than the second threshold, wherein
the size of the contention window is greater than or equal to the preset value.

13. The communication apparatus according to any one of claims 10 to 12, wherein
the processor is further configured to determine reference duration, wherein the reference duration comprises the first time unit, and the reference duration is defined as follows:
the reference duration consists of a 1^{st} time unit to an i^{th} time unit in the COT, wherein feedback information is obtainable in the COT for sidelink information sent in each time unit comprised in the reference duration, feedback information is unobtainable in the COT for sidelink information sent in the i^{th} time unit to an N^{th} time unit, and 1 ≤ i ≤ N;
or
the reference duration consists of a j^{th} time unit to the i^{th} time unit in the COT, wherein the j^{th} time unit is a 1^{st} time unit in the COT and in which a feedback is enabled, j ≤ i, and 1 ≤ i ≤ N.

14. The communication apparatus according to claim 13, wherein at least one of the first threshold and the second threshold is configured by a resource pool.

15. The communication apparatus according to claim 11 or 12, wherein that the feedback information comprises the ACK is specifically that an acknowledgment corresponding to the first sidelink information is received, or no negative acknowledgment corresponding to the first sidelink information is received.

16. A communication apparatus, comprising a processor and a transceiver, wherein
the processor is configured to obtain channel occupancy time COT, wherein the COT consists of N time units, and N is an integer greater than or equal to 1;
the transceiver is configured to send first sidelink information to at least one terminal device in a first time unit in the COT, wherein the first time unit comprises at least one time unit, the first sidelink information comprises at least one piece of sidelink information, and the at least one time unit is in one-to-one correspondence with the at least one piece of sidelink information;
the processor is further configured to: determine a size of a contention window, and
when a third condition is met, determine that the size of the contention window is a preset value, wherein the third condition comprises: a ratio of a quantity of pieces of fourth sidelink information to a quantity of pieces of third sidelink information is less than a first threshold;
when a fourth condition is met, determine that the size of the contention window remains unchanged, wherein the fourth condition comprises: a ratio of a quantity of pieces of fourth sidelink information to a quantity of pieces of third sidelink information is greater than or equal to a first threshold and less than a second threshold; or
when a fifth condition is met, increase the size of the contention window, wherein the fifth condition comprises: a ratio of a quantity of pieces of fourth sidelink information to a quantity of pieces of third sidelink information is greater than or equal to a second threshold, wherein
the size of the contention window is greater than or equal to the preset value, the third sidelink information belongs to the first sidelink information, the third sidelink information comprises sidelink information whose quantity of transmission times is equal to 1, the fourth sidelink information belongs to the first sidelink information, and the fourth sidelink information comprises sidelink information whose quantity of transmission times is greater than 1; and
determine, based on the size of the contention window, a random backoff number for performing a channel access procedure; and
the transceiver is further configured to send second sidelink information based on the channel access procedure.

17. A communication apparatus, comprising a processor and a transceiver, wherein
the processor is configured to obtain channel occupancy time COT, wherein the COT consists of N time units, and N is an integer greater than or equal to 1;
the transceiver is configured to send first sidelink information to at least one terminal device in a first time unit in the COT, wherein the first time unit comprises at least one time unit, the first sidelink information comprises at least one piece of sidelink information, and the at least one time unit is in one-to-one correspondence with the at least one piece of sidelink information;
the processor is further configured to: determine a size of a contention window, and
when a third condition is met, determine that the size of the contention window is a preset value, wherein the third condition comprises: a quantity of sending times of third sidelink information is less than a first threshold;
when a fourth condition is met, determine that the size of the contention window remains unchanged, wherein the fourth condition comprises: a quantity of sending times of the third sidelink information is greater than or equal to a first threshold and less than a second threshold; or
when a fifth condition is met, increase the size of the contention window, wherein the fifth condition comprises: a quantity of sending times of the third sidelink information is greater than or equal to a second threshold, wherein
the size of the contention window is greater than or equal to the preset value, the third sidelink information belongs to the first sidelink information, and the third sidelink information is sidelink information with a maximum quantity of transmission times; and
determine, based on the size of the contention window, a random backoff number for performing a channel access procedure; and
the transceiver is further configured to send second sidelink information based on the channel access procedure.

18. A communication apparatus, comprising a processor and a transceiver, wherein
the processor is configured to: obtain channel occupancy time COT, wherein the COT consists of N time units, and N is an integer greater than or equal to 1; and
determine reference duration, wherein the reference duration comprises the first time unit, and the reference duration is defined as follows:
the reference duration consists of a 1^{st} time unit to an i^{th} time unit in the COT, wherein feedback information is obtainable in the COT for sidelink information sent in each time unit comprised in the reference duration, feedback information is unobtainable in the COT for sidelink information sent in the i^{th} time unit to an N^{th} time unit, and 1 ≤ i ≤ N;
or
the reference duration consists of a j^{th} time unit to the i^{th} time unit in the COT, wherein the j^{th} time unit is a 1^{st} time unit in the COT and in which a feedback is enabled, and j ≤ i;
the transceiver is configured to send first sidelink information to at least one terminal device in the first time unit in the COT, wherein the first time unit comprises at least one time unit, the first sidelink information comprises at least one piece of sidelink information, and the at least one time unit is in one-to-one correspondence with the at least one piece of sidelink information;
the processor is further configured to: determine a size of a contention window based on feedback information of the at least one terminal device for the first sidelink information; and
determine, based on the size of the contention window, a random backoff number for performing a channel access procedure; and
the transceiver is further configured to send second sidelink information based on the channel access procedure.

19. A communication apparatus, comprising a processor, wherein the processor is coupled to a memory, the memory is configured to store instructions, and when the instructions are run by the processor, the communication apparatus is enabled to perform the method according to any one of claims 1 to 9.

20. A computer-readable storage medium, comprising instructions, wherein when the instructions are run on a computer, the computer is enabled to perform the method according to any one of claims 1 to 9.
